(19) Europäisches Patentamt
European Patent Office
Office européen des brevets

(11) **EP 4 631 332 A1**

(12) **EUROPEAN PATENT APPLICATION**

(43) Date of publication:
**15.10.2025 Bulletin 2025/42**

(21) Application number: **25161721.3**

(22) Date of filing: **05.03.2025**

(51) International Patent Classification (IPC):
**A01C 5/06** (2006.01)   **G01B 11/22** (2006.01)
**A01C 7/20** (2006.01)   **A01C 7/10** (2006.01)
**A01B 63/111** (2006.01)

(52) Cooperative Patent Classification (CPC):
**A01C 5/064; G01B 11/22;** A01B 63/1112;
A01C 7/105; A01C 7/203

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2024 US 202418613784**

(71) Applicant: **Deere & Company
Moline, IL 61265 (US)**

(72) Inventors:
• **Mizushima, Akira
Mannheim (DE)**
• **Kise, Michio
Mannheim (DE)**
• **Orth, Matthew
Mannheim (DE)**
• **Jung, Boyoon
Mannheim (DE)**

(74) Representative: **Reichert, Christian
John Deere GmbH & Co. KG
Mannheim Regional Center
Global Intellectual Property Services
John-Deere-Straße 70
68163 Mannheim (DE)**

(54) **WORK MACHINE**

(57)   A work machine (140) is disclosed. The work machine (140) comprising: a chassis supported by at least one ground engaging mechanism; and a row unit (14) coupled to the chassis, the row unit (14) comprising: a furrow opener (22) configured to open a trench or furrow (192) as the machine (140) moves across ground; an imaging unit (62) configured to capture an image including at least part of the trench or furrow (192); a structured light unit (64) configured to project structured light on the trench or furrow (192); a general illumination light (68) configured to illuminate the trench or furrow (192); a control and image processing unit (1012) communicatively coupled to the imaging unit (62); and a shield (1908, 1910) configured to limit disturbances in images captured by the imaging unit (62); wherein the imaging unit (62) captures an image (1900), the image (1900) comprising the trench or furrow (192) with the structured light of the structured light unit (64) on the trench or furrow (192), and at least one shield (1908, 1910) and communicates the image (1900) to the control and image processing unit (1012); wherein the control and image processing unit (1012) processes the image by converting a plurality of points of the structured light of the structured light unit (64) to plane points and calculates a depth of the trench or furrow (192) via the plane points; wherein the image at least partially includes the trench or furrow (192), a laser (1906), and at least one of a first or second shield (1908, 1910) wherein the first and second shield (1908, 1910) are configured to limit disturbances in images captures by the imaging unit (62).

FIG. 2

## Description

### TECHNICAL FIELD

The present disclosure relates to a work machine and more particular to visualization systems for work machines.

### BACKGROUND

There is a wide variety of different types of agricultural machines that apply material to an agricultural field. Some such agricultural machines include sprayers, tillage machines with side dressing bars, air seeders, and planters that have row units.

As one example, a row unit is often mounted to a planter with a plurality of other row units. The planter is often towed by a tractor over soil where seed is planted in the soil, using the row units. The row units on the planter follow the ground profile by using a combination of a down force assembly that imparts a down force to the row unit to push disk openers into the ground to form a furrow or trench, and gauge wheels to set depth of penetration of the disk openers.

Having an accurate furrow depth is important information to enable uniform crop emergence. Previously, there was no technology to estimate furrow depth in real time and an operator was required to dig the furrow to confirm the depth was correct. More recently, a combination of a camera and light unit have been used to estimate furrow depth in real-time. However, to estimate furrow depth accurately, the relationship between the furrow camera and position of the light need to be well calibrated. It would be desirable to have an accurate calibration method for the furrow camera and light unit to estimate an accurate and consistent furrow depth. The discussion above is merely provided for general background information and is not intended to be used as an aid in determining the scope of the claimed subject matter.

### SUMMARY

The present disclosure may comprise one or more of the following features and combinations thereof.

According to the present disclosure, a work machine may include a chassis supported by at least one ground engaging mechanism and a row unit coupled to the chassis. The row unit may include a furrow opener configured to open a trench or furrow as the machine moves across ground, an imaging unit configured to capture an image including at least part of the trench or furrow, a structured light unit configured to project structured light on the trench or furrow, a general illumination light configured to illuminate the trench or furrow, a control and image processing unit communicatively coupled to the camera, and a shield configured to limit disturbances in images captured by the imaging unit. The imaging unit may capture an image, the image comprising the trench or furrow with the structured light of the structured light unit on the trench or furrow, and at least one shield and may communicate the image to the control and image processing unit. The control and image processing unit may process the image by converting a plurality of points of the structured light of the structured light unit to plane points and calculates a depth of the trench or furrow via the plane points. The image may at least partially include the trench or furrow, a laser, and at least one of a first or second shield wherein the first and second shield are configured to limit disturbances in images captures by the imaging unit.

In some examples, the image may include a region of interest, the region of interest may include the shield and the structured light of the structured light unit projected on the trench or furrow, and the control and processing unit may be configured to receive the image from the imaging unit, compare the image to one or more predefined templates stored in the imaging unit, and define the region of interest via the comparison between the image and the one or more predefined templates.

### BRIEF DESCRIPTION OF THE DRAWINGS

The above-mentioned aspects of the present disclosure and the manner of obtaining them will become more apparent and the disclosure itself will be better understood by reference to the following description of the implementations of the disclosure, taken in conjunction with the accompanying drawings, wherein:

Fig. 1 is a side view of a visualization system mounted on a planter row unit;
Fig. 2 is a side view of the visualization system mounted on the planter row unit of Fig. 1;
Fig. 3 is a side view of the visualization system mounted on the planter row unit of Fig. 1 wherein the planter row unit is coupled to a tractor;
Fig. 4 is a cross-sectional view of a trench profile as determined by the visualization system of Fig. 1;
Fig. 5 is a cross-sectional view of a first implementation of a camera field-of-view of a furrow by the visualization system of Fig. 1 with a boundary;
Fig. 6 is cross-sectional view a second implementation of a camera field-of-view of a furrow by the visualization system of Fig. 1 with a boundary;

Fig. 7 is a cross-sectional view including an image projected by a structured light unit of the visualization system of Fig. 1;

Fig. 8 is a flow diagram of a procedure to determine an acceptable error placement of a commodity from the image of the Fig. 7 implementation;

Fig. 9 is a simplified schematic of the visualization system of Fig. 1 including an imaging unit and the structured light unit;

Fig. 10 a schematic of an example of a calibration system including the structured light unit, imaging unit, and general illumination light at least partially directed at a calibration target and coupled to a control and image processing unit;

Fig. 11 is a top view of an example of the calibration target of Fig. 10;

Fig. 12 is a top view of an example of the calibration target of Fig. 11 with a plurality of regions and light from the structured light unit including a first image point and a second image point;

Fig. 13 is a flow diagram of one example of a method to calibrate a laser plane;

Fig. 14 is a flow diagram of a method to measure the depth of a trench or furrow based on a laser image;

Fig. 15a is a side perspective view of a validation target with a plurality of steps;

Fig. 15b is a side view of an example of a validation target with a plurality of steps;

Fig. 16 is a flow diagram of a method to validate the calibration of the imaging unit and structured light unit;

Fig. 17 is a two-dimensional plot of an image created from undistorted laser points;

Fig. 18 is a two-dimensional plot of the plane projected coordinate points;

Fig. 19 a rearward view of one example of an image from the imaging unit of the row unit with the laser, trench or furrow in the image and a region of interest on the image;

Fig. 20 is a rearward view of a second example of an image from the imaging unit of the row unit with the region of interest and a plurality of template regions of interest;

Fig. 21a is a schematic of a top side template;

Fig. 21b is a schematic of a top corner template;

Fig. 21c is a schematic of a bottom corner template;

Fig. 21d is a schematic of a bottom side template;

Fig. 22 is a flow diagram of a method to compute templates; and

Fig. 23 is a flow diagram of a method to determine the region of interest.

Corresponding reference numerals are used to indicate corresponding parts throughout the several views.

**DETAILED DESCRIPTION**

For the purposes of promoting an understanding of the principles of the present disclosure, reference will now be made to the implementations described herein and illustrated in the drawings and specific language will be used to describe the same. It will nevertheless be understood that no limitation of the scope of the present disclosure is thereby intended, such alterations and further modifications in the illustrated devices and methods, and such further applications of the principles of the present disclosure as illustrated therein being contemplated as would normally occur to one skilled in the art to which the present disclosure relates.

The method and the system according to the disclosure may be applied in a variety of devices equipped with an imaging unit 62 and a structured light unit 64, for example, in various agricultural machines. The methods and systems may be applied, for example, to a row unit of an agricultural machine, such as a tractor.

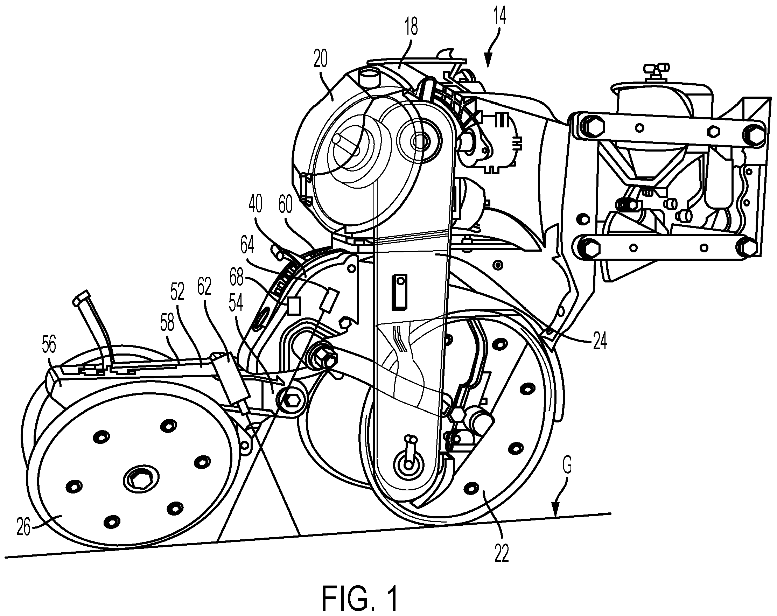

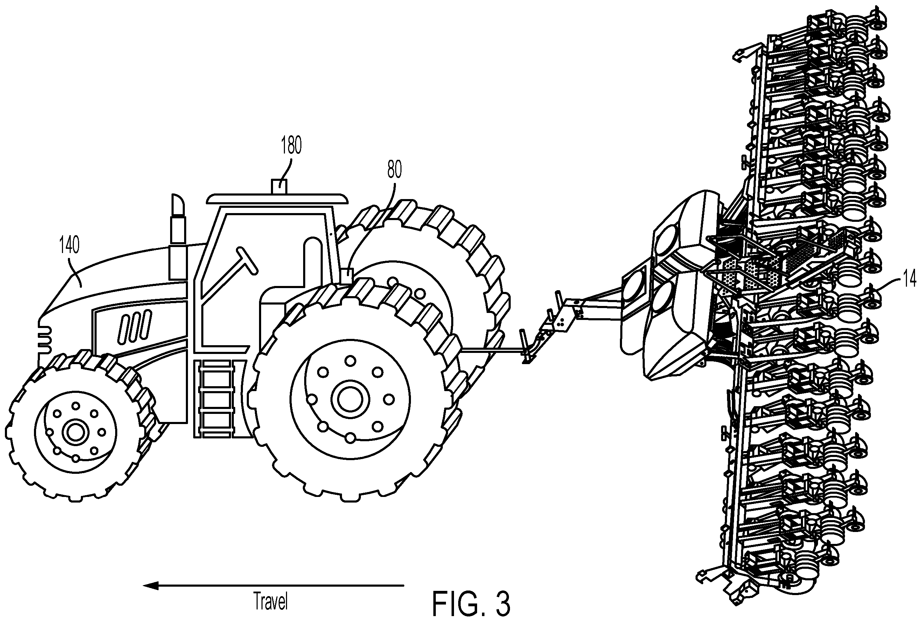

Referring now to Figs. 1, 2, and 3, an implementation of a planter row unit 14 is coupled to an agricultural work machine 140 such as a tractor. The planter row unit 14 is an illustrative implementation wherein other implementations of planter row units may be used with the present disclosure. In Fig. 1, only a single planter row unit 14 is shown, but a plurality of planter row units 14 may be coupled to a frame of the agricultural work machine 140 in any known manner. The planter row unit 14 may be coupled to the frame by a linkage (not illustrated) so that the planter row unit 14 may move up and down to a limited degree relative to the frame.

Each planter row unit 14 may include an auxiliary or secondary hopper 18 for holding product such as fertilizer, seed, chemical, or any other known product or commodity. In this implementation, the secondary hopper 18 may hold seed. As such, a seed meter 20 is shown for metering seed received from the secondary seed hopper 18. A furrow opener or furrow opening disk 22 may be provided on the planter row unit 14 for forming a furrow or trench in a field for receiving metered seed (or other product) from the seed meter 20. The seed or other product may be transferred to the trench from the seed meter 20 by a seed delivery system 24. In one implementation, a closing system or closing wheel 26 may be coupled to each planter row unit 14 and is used to close the furrow or trench with the seed or other product contained therein. The closing system includes a closing wheel but in other implementations the closing system may include closing disks, closing tires, and/or drag chains to name a few examples.

In one implementation, the seed meter 20 is a vacuum seed meter, although in alternative implementations other types of seed meters using mechanical assemblies or positive air pressure may also be used for metering seed or other product. As described above, the present disclosure is not solely limited to dispensing seed. Rather, the principles and teachings of the present disclosure may also be used to apply non-seed products to the field. For seed and non-seed products, the planter row unit 14 may be considered an application unit with a secondary hopper 18 for holding product, a product meter for metering product received from the secondary hopper 18 and an applicator for applying the metered product to a field. For example, a dry chemical fertilizer or pesticide may be directed to the secondary hopper 18 and metered by the product meter 20 and applied to the field by the applicator.

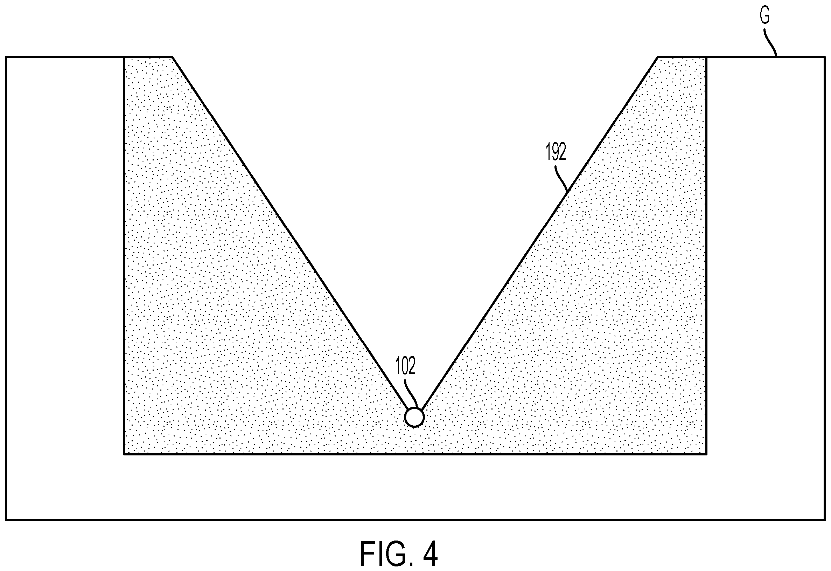

The planter row unit 14 includes a shank 40. The shank 40 is coupled to a closing wheel frame 52. The closing wheel frame 52 has a pivot end 54 that is pivotably connected to a pivot 49 and an opposite end 56 with a body portion 58 that spans between the pivot end 54 and the opposite end 56. The planter row unit 14 includes a pair of furrow opening disks 22 rotatably mounted on the shank 40 and a pair of closing wheels 26 rotatably mounted on the closing wheel frame 52. The planter row unit 14 may also include a pair of gauge wheels but those are not illustrated. The pair of furrow opening disks 22 form a trench or furrow 192 in the field or in a ground surface G during operation of the planter row unit 14. Alternatively, other opening devices may be used in place of the pair of furrow opening disks 22. The trench 192 may have a cross-sectional shape as a V shape as illustrated in Fig. 4. In yet another implementation, the trench 192 may have other cross-sectional shapes. The pair of closing wheels 26 close or cover the trench or furrow 192 with displaced soil that occurs from the pair of furrow opening disks 22 opening or forming the trench 192 in the ground surface G. Alternatively, other closing devices may be used in place of the pair of closing wheels 26.

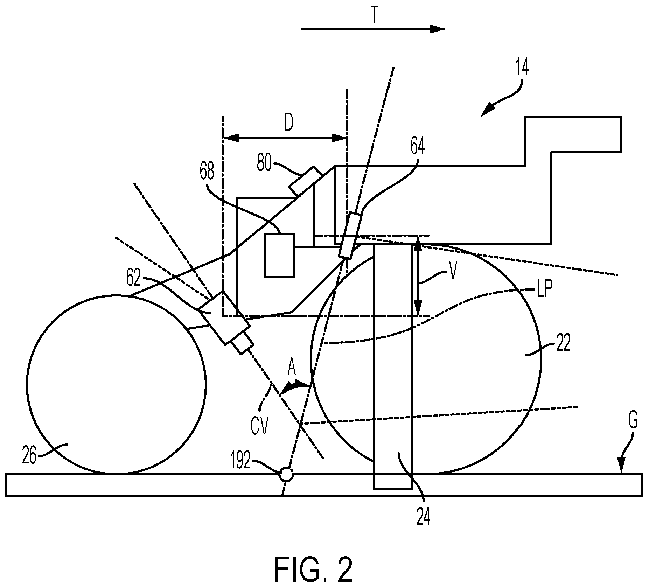

An exemplary implementation of a visualization system 60 may be operably connected and mounted to the planter row unit 14 is illustrated in Figs. 1 and 2. The visualization system 60 may include an imaging unit 62 and a structured light unit 64. The imaging unit 62 may be laterally or horizontally offset a distance D from the structured light unit 64. In the illustrated implementation, the imaging unit 62 is vertically offset a distance V from the structured light unit 64. In one implementation, the horizontal and vertical distances D and V are small such that the imaging unit 62 and the structured light unit 64 are in close proximity to one another and may be assembled in a visualization kit that includes a package or container that holds the imaging unit 62 and the structured light unit 64 that is mounted on the planter row unit 14. In other implementations, the imaging unit 62 is not vertically offset from the structured light unit 64. In the illustrated implementation in Fig. 2, the imaging unit 62 has a principle optical axis CV that intersects with a light plane LP from the structured light unit 64 to form an angle A there between. The angle A may be less than 90°, 90°, or greater than 90°. In other implementations, the imaging unit 62 is oriented such that the principle optical axis CV may be oriented towards the closing wheels 26. In any implementation, the principle optical axis CV of the imaging unit 62 may or may not intersect the light plane LP from the structured light unit 64. The principle optical axis CV is along a centerline of a field of view of the imaging unit 62. In any of these implementations, the field of view of the imaging unit 62 is arranged to capture images of the patterned light from the structured light unit 64 that intersects with the trench 192 formed in the ground surface G.

Although one imaging unit 62 is illustrated, additional cameras 62 may be used with the structured light unit 64. The imaging unit 62 is mounted between the pair of closing wheels 26 and the pair of furrow opening disks 22 or alternatively the imaging unit 62 is mounted between the pair of closing wheels 26 and the seed delivery system 24. The structured light unit 64 is also mounted between the pair of closing wheels 26 and the pair of furrow opening disks 22 or alternatively the structured light unit 64 is mounted between the pair of closing wheels 26 and the seed delivery system 24. In the illustrated implementation, the imaging unit 62 is positioned adjacent to the pair of closing wheels 26 and the structured light unit 64 is positioned adjacent to the seed delivery system 24 and/or the pair of furrow opening disks 22. In other implementations, the structured light unit 64 is positioned adjacent to the pair of closing wheels 26 and the imaging unit 62 is positioned adjacent to the seed delivery system 24 and the pair of furrow opening disks 22.

In some implementations, the visualization system 60 may include a general illumination light 68 mounted to the planter row unit 14. The general illumination light 68 may include one or more light emitting diodes (LED) or broad-beamed, high intensity artificial light. The general illumination light 68 may illuminate the trench 192 to help capture the visual context of the trench 192 by the imaging unit 62. The general illumination light 68 may be used with the structured light unit 64. Imaging by the imaging unit 62 may be performed with alternating light sources such that the structured light unit 64 is operable while the general illumination light 68 is non-operable, and vice versa wherein the structured light unit 64 is non-operable while the general illumination light 68 is operable. Non-operation of the general illumination light 68 during operation of the structured light unit 64 enables the imaging unit 62 to capture a 2D image where the pattern created by the structured light unit 64 stands out significantly from the rest of the background. Non-operation of the structured light unit 64 during operation of the general illumination light 68 enables the imaging unit 62 to capture a better image of the visual context of the trench 192 by the imaging unit 62. Alternatively, the general illumination light 68 and the structured light unit 64 may be operational together. For example, the structured light unit 64 is activated while the imaging unit 62 captures images, however, the general illumination light 68 is not operational for every image that is captured by the imaging unit 62. As a further example, the general illumination light 68 may be operational for some of the images that are captured and non-operational for other of the images that are captured by the imaging unit 62. The general illumination light 68 may be placed between the pair of closing wheels 26 and the pair of furrow opening disks 22. The general illumination light 68 may alternatively be mounted or combined with the imaging unit 62. The general illumination light 68 may be placed under the shank 40 or under the closing wheel frame 52. The general illumination light 68 may be placed anywhere on the planter row unit 14 to illuminate a field of view of the imaging unit 62.

In any implementation, the imaging unit 62 is oriented to point down towards the ground surface G at the trench 192 that is formed by the pair of furrow opening disks 22. The imaging unit 62 also points down toward the projected light from the structured light unit 64 at the trench 192 formed in the ground surface G. The structured light unit 64 projects a narrow band of light across the trench 192 to produce a line of illumination or patterned light and may be used for location of a seed or commodity 102 therein and location of a boundary 200. The structured light unit 64 points towards the ground surface G and the trench 192 formed therein.

The structured light unit 64 includes a single laser or single light source that projects a single line, multiple lines, grids, stripes, one or more dots or point projections, cross, triangular, or other known pattern of light, collectively "patterned light" on the trench 192 formed in the ground surface G. Alternatively, the structured light unit 64 may include multiple lasers or light sources. For example, the structured light unit 64 may emit a single point projection to a trench bottom for determining a trench depth or commodity location. As another example, the structured light unit 64 may emit a single line projection for measuring cross-section of the trench as well as the trench depth or the commodity location. As yet another example, the structured light unit 64 may emit an area projection such as multiple lines, grids, or stripes for measuring a location of the commodity 102, the trench 192, and the boundary 200 at various points within the measured section. In one implementation, a slit in a light cover may be positioned in front of the structured light unit 64 to thereby project multiple lines on the trench 192 to provide additional points, mesh, or an area of 3D points to perform a multiple cross-sectional measurement. Multiple lines may be beneficial in a dusty environment to increase the potential to obtain a good measurement. The structured light of the structured light unit 64 may also pass through a digital spatial light modulator to form a pattern with regular and equidistant stripes of light on the trench 192. In one implementation, projection by the structured light unit 64 of a single line as the planter row unit 14 moves towards the direction of laser scanning T for additional scanning of cross-sectional measurements and measurement of the commodity 102.

In one implementation, the structured light of the structured light unit 64 is a green light, but in other implementations the structured light of the structured light unit 64 may be another colored light such as blue or white light. If the structured light unit 64 is configured as a colored light, then the imaging unit 62 may be a color or monochrome camera. Alternatively, the structured light of the structured light unit 64 may be a near-infrared (NIR), infrared (IR), or other non-visible range for better visibility in challenging or obstructive environmental conditions such as dust, fog, or haze wherein the NIR or IR light is used with the imaging unit 62 being infrared or near-infrared. As such, the imaging unit 62 and the structured light unit 64 may be operated in the visible spectrum range, or outside of the visible spectrum range such as infrared range in order to have better air obscurant penetration such as dust penetration. While the trench 192 is formed by the furrow opening disks 22, soil and dust may fill or permeate the air so it is difficult for the operator or a conventional color camera to capture the trench 192 cross-sectional shape. A near infrared imaging unit 62 may be used in dusty or visibly challenging environments to improve the visualization of the 2D plane that is projected by the structured light unit 64.

In certain implementations, the visualization system 60 includes or is operatively connected to a controller 80 structured to perform certain operations to control the imaging unit 62, the structured light unit 64, and the general illumination light 68. The controller 80 may be placed anywhere on the planter row unit 14, the planter, the agricultural work machine or tractor 140, or any work machine that may be connected to or capable of performing one or more planting operations. In certain implementations, the imaging unit 62 includes the controller 80. In certain implementations, the controller 80 forms a portion of a processing subsystem including one or more computing devices having memory, processing, and communication hardware. The controller 80 may be a single device or a distributed device, and the functions of the controller 80 may be performed by hardware or by instructions encoded on computer readable medium. The controller 80 may be included within, partially included within, or completely separated from other controllers (not shown) associated with the work machine and/or the visualization system 60. The controller 80 is in communication with any sensor or other apparatus throughout the visualization system 60, including through direct communication, communication over a datalink, and/or through communication with other controllers or portions of the processing subsystem that provide sensor and/or other information to the controller 80.

The vehicle controller 80 may include a GPS device or be operably coupled with a GPS device 180 to enable location-based field registration and mapping of commodity or seed placement, depth estimation, and location-based images on a map from the captured images. Alternatively, in other implementations, the visualization system 60 includes a GPS device. A planter section control (not illustrated) includes a mechanical shut-off device coupled to the controller 80 and a GPS receiver device on the agricultural work machine 140. The GPS receiver may be the GPS device 180. The shut-off device may be a single row clutch mounted on every row unit or an electronic shut-off device that controls a section or multiple rows of the planter row units.

In some implementations, the visualization system 60 is operably connected to a mobile device (not illustrated) such as a mobile phone, computer, laptop, or electronic tablet that includes a user interface for operably engaging with the visualization system 60 and an operator; however, in other implementations the visualization system 60 is not connected to a mobile device. In some implementations, the user interface of the mobile device may display the same display as a user interface in the agricultural work machine 140 or a different display.

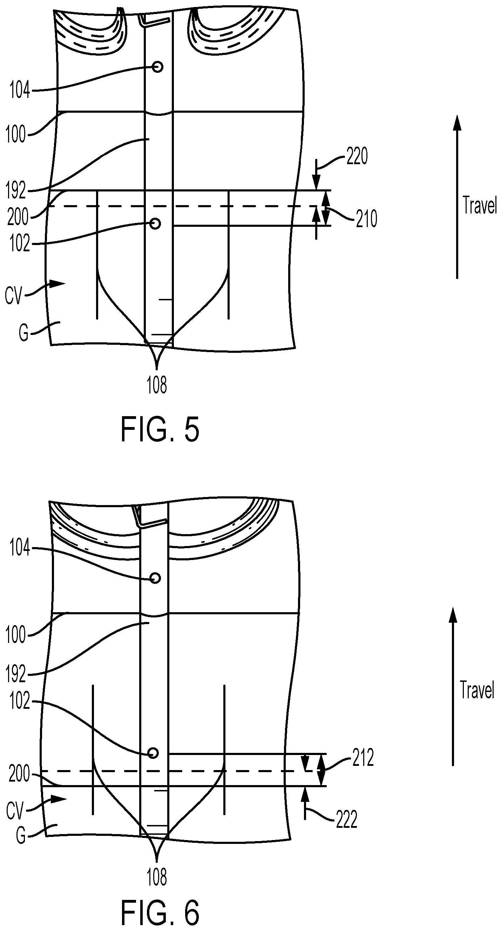

Figs. 5 and 6 illustrate the camera field of view CV that includes the trench or furrow 192 in the field or in the ground surface G, the seed or commodity 102 and a subsequent seed or commodity 104 placed in the trench 192, and the direction of travel T of the agricultural work machine 140. In Figs. 5 and 6, the seed or commodity 102 is considered a boundary commodity in that the ideal or intended location for this specific commodity is on the boundary 200. Fig. 5 may illustrate an example where the commodity 102 is placed on or adjacent to a rearward boundary of the desired error of placement 222, and Fig. 6 may illustrate an example where the commodity is placed on or adjacent to a forward boundary of the desired error of placement 222. The structured light unit 64 projects a single line laser or a two-dimensional (2D) laser or light plane LP of light toward the ground surface G, and a light image 100 may be illustrated as a line. The light image 100 is a single line in Figs. 5 and 6, but more complicated patterns such as multiple lines, grids, or dots may be used in order to have more 3D points. In the illustrated implementation, the visualization system 60 includes another light source that projects a pair of guideline lights 108 that are positioned exterior to the trench or furrow 192. The pair of guideline lights 108 assist the operator driving the agricultural work machine 140 and/or the visualization system 60 to maintain the camera field of view CV positioned or oriented along the trench or furrow 192. The pair of guideline lights 108 may not be present in other implementations. In some implementations, a marker such as a ruler or a coin may be displayed in the light image 100 for a reference scale or to represent relative location of the center of the camera field of view CV.

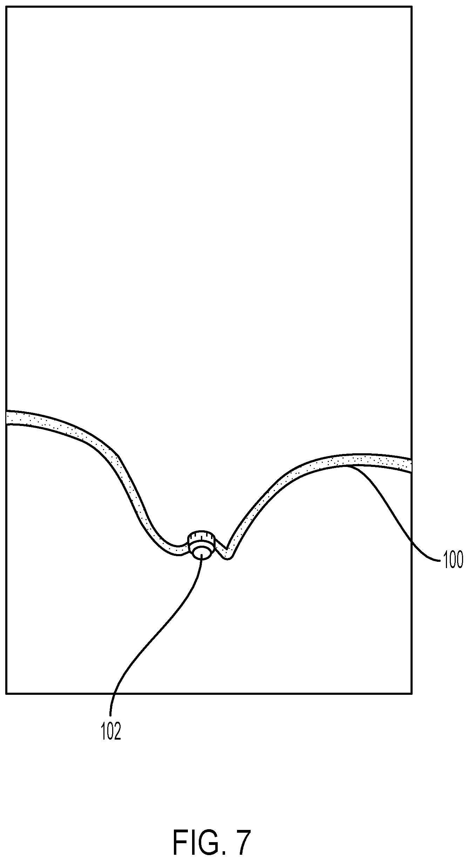

Figs. 5 and 6 also illustrate the boundary 200 as determined by any of the visualization system 60, the controller 80, user input, global timestamping, GPS geospatial tag, or other techniques, wherein the boundary 200 is representative of the location in the ground surface G in which the commodity 102 is intended to be deposited. In Fig. 5, an error of placement 210 is the distance from the boundary 200 to the commodity 102, i.e., the boundary commodity. The error of placement 210 illustrates an underlap in Fig. 5. In Fig. 6, an error of placement 212 is the distance from the boundary 200 to the commodity 102, i.e., the boundary commodity. The error of placement 212 illustrates an overlap. The errors of placement 210 and 212 are actual distance differences between the commodity 102 and the boundary 200. Fig. 7 may illustrate a commodity 102 located in the trench or furrow 192 with the light image 100 located at least partially on the trench or furrow 192. In some implementations, a desired error of placement 220 and 222 is determined as illustrated in Figs. 5 and 6. The desired error of placement 220 and 222 is a desired distance for deposition of the commodity 102 to the boundary 200. The desired errors of placement 220 and 222 are preferable distances in which the commodity 102 is deposited relative to the boundary 200. In some implementations, the desired errors of placement 220 and 222 is set by an operator. In some implementations, the desired errors of placement 220 and 222, respectively, are the same as the errors of placement 210 and 212, respectively.

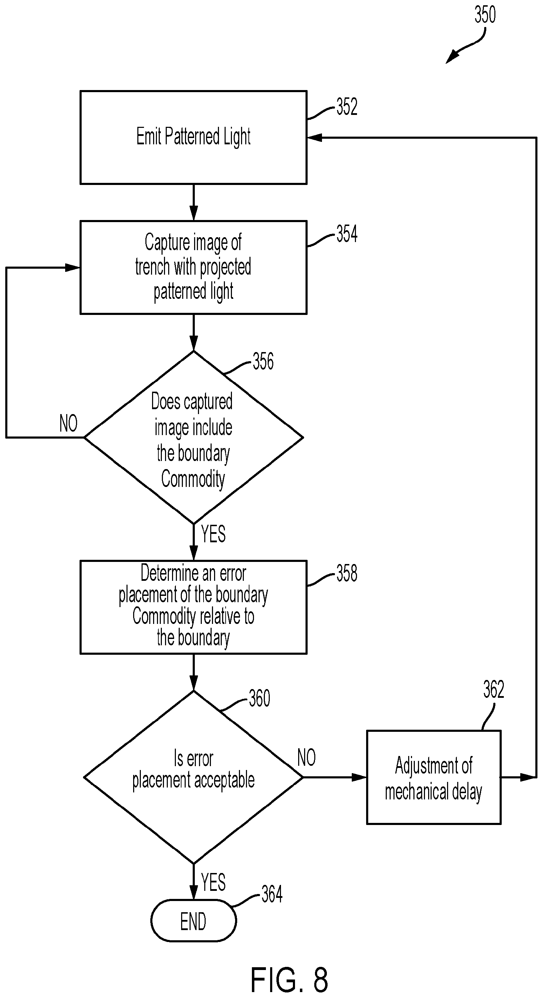

Measurement of the location of the commodity 102 will now be described by measuring the three-dimensional (3D) location of the laser points or patterned light of the light image 100 that is projected by the structured light unit 64. In one form, the measurement of the location of the commodity 102 is determined by using structured-light based sensing. In the implementation wherein the structured light unit 64 projects a single line laser, the structured light unit 64 emits patterned light (see Fig. 2) toward the ground surface G, and the light image 100 illustrated as a line is the intersection of the laser plane LP and the location of the commodity 102 in the ground surface G. The light image 100 may be a single line, but more complicated patterns such as multiple lines, grids, or dots, or any type of patterned light previously discussed could be used in order to have more or less 3D points. The imaging unit 62 captures the light image 100 of the trench 192 with the commodity 102 therein with the projected patterned light. The geometric relationship between the laser or light plane LP projected by the structured light unit 64 and the principle optical axis CV of the imaging unit 62 is determined by the location and orientation of the imaging unit 62 and the structured light unit 64 relative to each other, therefore the 3D location of the laser line pixels in the light image 100 is determined. After the 3D location of the laser line pixels are determined, a 3D location of the trench 192 is determined. The 3D location of the trench 192 or trench parameters may include depth, width, and other geometric features, and geographical identification metadata of the trench 192 as well as the time of the captured light image 100 are computed based on 3D measurement in the light image 100. Additional images 100 may be captured until the light image 100 includes the trench 192 with the commodity 102 therein. The 3D location of the trench 192 and the commodity 102 or commodity parameters may include depth of the commodity 102, distance from the commodity 102 to the boundary 200, and geographical identification metadata of the commodity 102 as well as the time of the captured light image 100 with the commodity 102 are computed based on 3D measurement in the light image 100. Certain systems are described herein and include examples of controller operations in various contexts of the present disclosure. Referring to Fig. 8, one implementation of a method 350 is illustrated, and the method 350 may illustrate one example wherein the controller 80 controller 80 determines whether an error placement 210, 212 of the boundary commodity 102 relative to the boundary 200 is acceptable. In some examples, when the error placement 210, 212 is not acceptable, adjustment of a mechanical delay offset factor of the planter row unit 14 may be determined. The method 350 may include any number of blocks and the blocks may be executed in any order. In some implementations, there may be more or less blocks than those illustrated in Fig. 8.

According to some examples, as in block 352, the structured light unit 64 may emit the patterned light toward the ground surface G. In some examples, the patterned light may include the light image 100 illustrated as a line at the intersection of the emitted patterned light or laser plane LP and the trench in the ground surface G. The imaging unit 62 may capture the emitted patterned light or the light plane LP from the structured light unit 64 such that the imaging unit 62 captures the light image 100 of the trench with the projected patterned light, as in block 354. As discussed previously, the emitted patterned light may include a single line, multiple lines, grids, stripes, one or more dots or point projections, cross, triangle, or other known pattern of light, which corresponds to the projected patterned light that is captured in the light image 100, as in block 354. The controller 80 may be operable to determine the location of the projected light in the light image 100 (3D or three-dimensional space). At block 356, the controller 80 may be operable to determine whether the light image 100 includes the boundary commodity 102. If the light image 100 does not include the boundary commodity 102, then the imaging unit 62 may continue to capture the light image 100 of the trench with the projected patterned light, as in block 354. Returning to block 356, if the light image 100 includes the boundary commodity 102, then the procedure may continue to block 358 wherein the controller 80 may determine the error placement 210 or 212 of the boundary commodity 102 relative to the boundary 200 in the light image 100. In block 358, the controller 80 may also detect the geolocation of the boundary commodity 102 from an image and extend pixel mapping to geograph location of the boundary commodity 102. In block 358, the controller may determine the error placement 210 or 212 via measurements and/or GPS locations of the boundary commodity 102 relative to the boundary 200 based on images captured by the visualization system 60.

In block 360, the controller 80 may determine if the error placement 210 or 212 is acceptable. If the error placement 210 or 212 is not acceptable, then at block 362 adjustment of a mechanical delay offset factor of the planter row unit 14 may be determined. In block 362, adjustment of the mechanical delay offset factor of the planter components or mechanical delay offset factor of the planter section control in response to determined error placement 210 or 212 is not acceptable is made. The adjustments to the mechanical delay offset factor of the mechanical systems, the planter section control, and/or commodity delivery systems of the planter row unit 14 may be made by an operator or automatically such as by the controller 80.

In some examples, after executing block 362, the method 350 may continue to block 352. In some examples, in block 352, the procedure 350 may be repeated and the controller 80 may continue checking for the boundary commodity 102 in relation to the boundary 200 and an acceptable error placement 210 or 212. The method 350 may be applicable to commodity that may include seed, sprays, residue, fertilizer, growing plants, and/or emergence detection of a plant. In block 360, if the error placement 210 or 212 is acceptable, then at block 364 the method 350 may end.

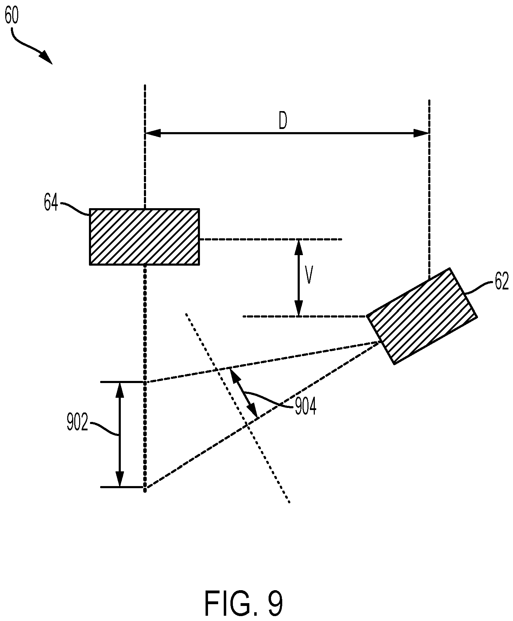

Fig. 9 is a simplified view of the visualization system 60 including the imaging unit 62 and the structured light unit 64 wherein the imaging unit 62 may be laterally or horizontally offset a distance D from the structured light unit 64. Each row unit 14 may have the imaging unit 62 and the structured light unit 64, and the horizontal and/or vertical distances between the imaging unit 62 and the structured light unit 64 may be different between row units 14. For example, the distance D between the camera or imaging device 62 and the structured light unit 64 may be greater or lesser in one row unit 14 relative to another row unit 14. The distance V between the camera or imaging device 62 and the structured light unit 64 may be different between row units 14. In some examples, the angle A between the camera or imaging device 62 and structured light unit 64 may be greater or lesser in one row unit 14 relative to another row unit 14. In some examples, each row unit 14 may be calibrated individually.

In the illustrated implementation, the imaging unit 62 may be vertically offset a distance V from the structured light unit 64. In some examples, the structured light unit 64 may be at least partially perpendicular with the ground surface G and may measure a true trench depth 902. In some examples, the imaging unit 62 may capture a camera or imagining unit trench depth. Because the imaging unit 62 may be offset a distance D, V from the structured light unit 64, the imaging unit trench depth 904 may be different from the true trench depth 902. Therefore, the structured light unit 64 and the imaging unit 62 may be calibrated relative to each other so that locations of the trench 192 may be detected and measured. These locations may be two-dimensional (hereinafter "2D") or three-dimensional (hereinafter "3D"). In some examples, the locations of additional features or items may be detected and measured, such as, for example, the 2D or 3D location of the commodity 102 and the boundary 200.

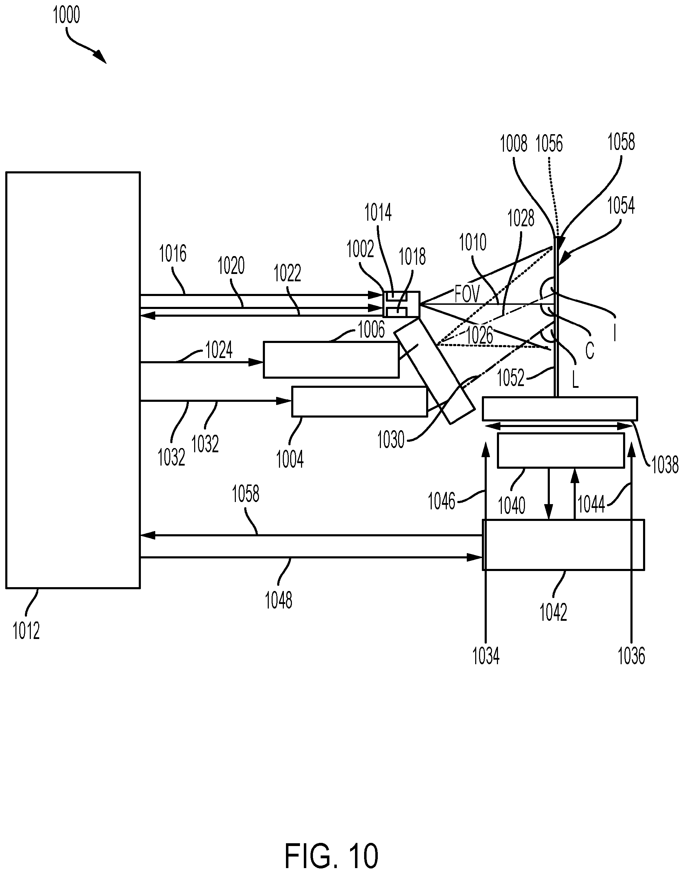

In Fig. 10 a diagram of a calibration system 1000 is illustrated. The calibration system 1000 may include an imaging unit 1002 coupled to a structured light unit 1004 and a general illumination light 1006. In some examples, the imaging unit 1002, structured light unit 1004, and general illumination light 1006 may be coupled to a row unit. The imaging unit 1002, structured light unit 1004, and general illumination light 1006 may be at least partially directed at a calibration target 1008. In some examples, the imaging unit 1002 may be offset a vertical distance V and/or a horizontal distance D from the structured light unit 1004 (see Fig. 9). In some examples, the imaging unit 1002 may not be offset a vertical distance V from the structured light unit 1004. In one example, the imaging unit 1002 may not be offset a horizontal distance D from the structured light unit 1004. The imaging unit 1002 may also be offset a vertical distance and/or horizontal distance from the general illumination light 1006. In some examples, the imaging unit 1002 may not be offset a vertical distance from the general illumination light 1006. In one example, the imaging unit 1002 may not be offset a horizontal distance from the general illumination light 1006. The imaging unit 1002 may include a field of view FOV, and the field of view may capture a 2D or 3D image. According to some examples, the field of view FOV may be the viewable area that can be imaged via the imaging unit 1002. The field of view FOV may be directed at the calibration target 1008. In some examples, the field of view FOV may diverge from the imaging unit 1002. In these examples, the area of the field of view FOV may have a proportional relationship with the distance from the target. More specifically, as the distance between the imaging unit 1002 and the target increases, the area of the field of view FOV may increase, and as the distance between the imaging unit 1002 and the target decreases, the area of the field of view FOV may decrease. In another example, the field of view FOV may not diverge. In this example, when the distance between the imaging unit 1002 and the calibration target 1008 increases the area captured in the field of view FOV may remain the same. The field of view FOV may have a center area 1010, and the center area 1010 may be a center portion of the field of view FOV. As illustrated in Fig. 10, the imaging unit 1002 may be perpendicular to the calibration target 1008. In these examples, the center area 1010 may create an angle C with the calibration target 1008 and the angle C may be 90°. In some examples, the imaging unit 1002 may be askew from being perpendicular relative to the calibration target 1008 and the angle C between the center area 1010 and the calibration target 1008 may be greater than 90°. In one example, the angle C may be between 90° and 120°. In another example, the angle C may be between 120° and 180°. In other examples, the angle C may be less than 90°. In a first example, the angle C may be between 90° and 45°. In another example, the angle C may be between 45° and 0°.

The imaging unit 1002 may be coupled to the control and image processing unit 1012. The control and image processing unit 1012 may include existing computer processors, or may include a special purpose computer or processor. Some implementations include products comprising machine-readable media for carrying or having machine-executable instructions or data structures stored thereon. The imaging unit 1002 may also include products comprising machine-readable media 1014 for carrying or having machine-executable instructions or data structures stored thereon. The machine-readable media for either the imaging unit 1002 or the control and image processing unit 1012 may be any available media that may be accessed by a general purpose or special purpose computer or other machine with a processor. By way of example, such machine-readable media may include RAM, ROM, EPROM, EEPROM, or other optical disk storage, magnetic disk storage, or other storage device or medium which may be used to carry or store desired program code in the form of machine-executable instructions or data structures and which may be accessed by a general purpose or special purpose computer or other machine with a processor.

The control and image processing unit 1012 may be communicatively coupled to the imaging unit 1002. In one example, the control and image processing unit 1012 may communicate calibration data 1016 to the imaging unit 1002. In some examples, the calibration data 1016 may be stored in the machine readable medium 1014 of the imaging unit 1002.

The imaging unit 1002 may include an image sensor 1018, such as, for example, a complementary metal-oxide-semiconductor (CMOS) image sensor. The imaging unit 1002 may be communicatively coupled to the control and image processing unit 1012. For example, the control and image processing unit 1012 may communicate an image capture signal 1020 to the imaging unit 1002, the imaging unit 1002 may capture an image, and the imaging unit 1002 may communicate the image 1022 to the control and image processing unit 1012.

The control and image processing unit 1012 may be communicatively coupled to the general illumination light 1006. The control and image processing unit may communicate a signal to the general illumination light 1006, such as an on/off signal 1024. When the general illumination light 1006 receives an on signal, the general illumination light 1006 may be on, or operable. When the general illumination light 1006 is on or operable, the general illumination light 1006 may illuminate an area 1026 on the calibration target 1008. When the general illumination light 1006 receives an off signal, the general illumination light 1006 may be off or non-operable. When the general illumination light 1006 is off or non-operable, the general illumination light 1006 may not illuminate the area 1026 on the calibration target 1008.

The general illumination light 1006 shown in Fig. 10 may operate similarly to the general illumination light 68 in Figs. 1-2. For example, the general illumination light 1006 may include one or more light emitting diodes (LED) or broad-beamed, high intensity artificial light. The general illumination light 1006 may illuminate the calibration target 1008 which may help capture the visual context of the calibration target 1008 by the imaging unit 1002. In some examples, the general illumination light 1006 may be used with the structured light unit 1004. In one example, the general illumination light 1006 and the structured light unit 1004 may operate alternatively, such that the general illumination light 1006 may operate when the structured light unit 1004 is non-operable and the structured light unit 1004 may operate when the general illumination light 1006 is non-operable. In some examples, operating the structured light unit 1004 without the general illumination light 1006 may enable the imaging unit 1002 to capture an image where the pattern created by the structured light unit 1004 is more visible relative to an image where both the structured light unit 1004 and the illumination light 1006 are in operation.

In some examples, the general illumination light 1006 may illuminate the area 1026 on the calibration target 1008. The area 1026 illuminated by the general illumination light 1006 may be an area on the calibration target 1008 that is larger than the area on the calibration target 1008 captured in the field of view FOV. In some examples, the area 1026 illuminated by the general illumination light 1006 may less than the area captured in the field of view FOV. In other examples, the area 1026 illuminated by the general illumination light 1006 and the area captured by the field of view FOV may be equal.

The illumination area 1026 may have a central area 1028. The central area 1028 may be a central portion of the illuminated area 1026 on the calibration target 1008. In some examples, the central area 1028 may create an angle I with the calibration target 1008. The angle I may be larger than 90°. In some examples, the angle I may be between 90° and 120°. In another example, the angle I may be between 120° and 180°. The angle I may also be less than 90°. In some examples, the angle I may be between 90° and 45°. In still other examples, the angle I may be between 45° and 0°. The control and image processing unit 1012 may also be communicatively coupled to the structured light unit 1004. The structured light unit 1004 may operate similar to the structured light unit 64 shown in Figs. 1-2. For example, the structured light unit 1004 may include a single laser or a single light source that projects an output 1020 such as a single line, multiple lines, grids, stripes, one or more dots or point projections, cross, triangle, or another known pattern of light, collectively "patterned light." Alternatively, the structured light unit 1004 may include multiple lasers or light sources. In one implementation, the structured light of the structured light unit 1004 may be a green light, but in other implementations the structured light of the structured light unit 1004 may be another colored light, such as blue or a white light. The structured light of the structured light unit 1004 may be a non-visible range, such as near-infrared (NIR) or infrared (IR), or another non-visible range.

The control and image processing unit 1012 may communicate an on/off signal 1032 to the structured light unit 1004. When the control and image processing unit 1012 communicates an on signal to the structured light unit 1004, the structured light unit 1004 may be on or operable. When the structured light unit 1004 is on or operable, it may project the laser 1030. When the control and image processing unit 1012 communicates an off signal to the structured light unit 1004, the structured light unit 1004 may be off or non-operable. When the structured light unit 1004 is off or non-operable, the structured light unit 1004 may not project a laser 1030.

The laser 1030 may contact the calibration target 1008. In some examples, the laser 1030 may be emitted at an angle L with the calibration target 1008. The angle L may be larger than 90°. In some examples, the angle L may be between 90° and 120°. In another example, the angle L may be between 120° and 180°. The angle L may also be less than 90°. In some examples, the angle L may be between 90° and 45°. In still other examples, the angle L may be between 45° and 0°. The calibration target 1008 may move relative to the imaging unit 1002. The calibration target 1008 may move to a first location 1034, a second location 1036, or any location therebetween. Additionally, the calibration target 1008 may move between a right end which is defined as into the page on Fig. 10, and a left end which is defined as out of the page in Fig. 10. The first location 1034 may be located closer to the imaging unit 1002 relative to the second location 1036. Thus, when the calibration target 1008 is located at or near the first location 1034, the calibration target 1008 may be closer to the imaging unit 1002 relative to when the calibration target 1008 is located at or near the second location 1036. In some examples the first location 1034 and second location 1036 may be transverse to the directional movement of the calibration target 1008. In some examples, the calibration target 1008 may be coupled to a base 1038, and the base may extend at least from the first location 1034 to the second location 1036 and at least from the right end 1056 to the left end 1058. The calibration target 1008 may be coupled to the base such that the calibration target 1008 is perpendicular to the base 1038. In some examples, the calibration target 1008 may be slightly askew from perpendicular to the base 1038.

The base 1038 may include or be coupled to an actuator 1040. The actuator 1040 may move between an extended position and a retracted position to move the calibration target 1008. In some examples, the actuator 1040 may have a motor (not shown) and the motor may move the actuator 1040. In one example, when the actuator 1040 moves to the extended position, the calibration target 1008 moves to the first location 1034, and when the actuator 1040 moves to the retracted position, the calibration target 1008 moves to the second location 1036. In another example, when the actuator 1040 moves to the extended position the calibration target 1008 moves to the second location 1036, and when the actuator 1040 moves to the retracted position the calibration target 1008 moves to the first location 1034. In some examples, when the actuator 1040 moves to the retracted position the calibration target 1008 moves to the right end 1056 and when the actuator 1040 moves to the extended position the calibration target 1008 moves to the left end 1056. In another example, when the actuator 1040 moves to the retracted position the calibration target 1008 moves to the left end 1058 and when the actuator 1040 moves to the extended position the calibration target 1008 moves to the right end 1058.

The calibration system 1000 may also include an actuator control processor 1042. The actuator control processor 1042 may be coupled to the actuator 1040 and to the control and image processing unit 1012. The actuator control processor 1042 may communicate with the actuator 1040. For example, the actuator control processor 1042 may provide an actuator control processor command 1044 to the actuator 1040, such as a motor control command, and the actuator control processor command 1044 may move the actuator motor, thereby moving both the actuator 1040 and the calibration target 1008.

In some examples, the actuator 1040 may include a sensor, and the sensor may communicate actuator information 1046 to the actuator control processor 1042. The actuator information 1046 may include, among other things, the actuator position. In some examples, the sensor may constantly communicate the actuator information 1046 to the actuator control processor 1042. In other examples, sensor may periodically communicate the actuator information 1046 to the actuator control processor 1042. In a first example, the sensor may communicate the actuator information 1046 to the actuator control processor 1042 based on movement of the actuator 1040. For example, the sensor may communicate the actuator information 1046 when the actuator 1040 moves or stops moving. The sensor may also communicate the actuator information 1046 when the actuator reaches a desired position. For example, the actuator control processor command 1044 may instruct or command the actuator 1040 to move to a particular position, and when the actuator 1040 reaches that position the sensor may communicate the actuator position to the actuator control processor 1042. In another example, the sensor may communicate the actuator information 1046 periodically based on time. For example, the sensor may communicate the actuator information 1046 every second, or every fraction of a second. In another example, the sensor may communicate the actuator information 1046 every two seconds, three seconds, five seconds, ten seconds, or an interval greater than ten seconds.

The actuator control processor 1042 may be communicatively coupled to the control and image processing unit 1012. In some examples, the actuator control processor 1042 may be wirelessly coupled to the control and image processing unit 1012. In other examples, the actuator control processor 1042 may be coupled to the control and image processing unit 1012 via a wired connection.

The control and image processing unit 1012 may communicate a control and image processing unit command 1048 to the actuator control processor 1042. In some examples, the control and image processing unit command 1048 may be the same command as the actuator control processor command 1044. In one implementation, the control and image processing unit command 1048 may include a position for the actuator 1040. In this implementation, the control and image processing unit command 1048 may instruct or command the actuator 1040 to move to a particular location. In a second implementation, the control and image processing unit command 1048 may instruct the actuator 1040 to move from its current location by a specified increment. In one non-limiting example, the control and image processing unit command 1048 may instruct or command the actuator 1040 to move 1cm towards the second location 1036. While in this example 1cm is provided as the increment, any increment is considered herein. For example, the control and image processing unit command 1048 may instruct the actuator to move by less than 2cm, 2cm, 3cm, 4cm, or by 5cm or more. Additionally, the control and image processing unit command 1048 may instruct the actuator to move by less than 1 in, 1 in, 2in, 6in, 1ft, 2ft, greater than 2ft, or any other increment and/or linear unit. Further, while the non-limiting example moved the actuator 1040 towards the second location 1036, the control and image processing unit command 1048 may also command the actuator 1040 to move towards the first location 1034, the right end 1056, and/or the left end 1058. In some examples, the control and image processing unit command 1048 may instruct the actuator control processor to move the calibration target 1008 to a specified position or to move the calibration target 1008 by a particular increment. In other examples, the control and image processing unit command 1048 may differ from the actuator control processor command 1044.

The actuator control processor 1042 may communicate information from the actuator control processor 1050 to the control and image processing unit 1012. The information from the actuator control processor 1050 may include information relating to the actuator position and/or information related to the position of the calibration target 1008. In some examples, the information from the actuator control processor 1050 may include measurement information related to the actuator position. In some examples, the information from the actuator control processor 1050 may be the same as the actuator information 1046. In other examples, the information from the actuator control processor 1050 may be different from the actuator information 1046.

The calibration target 1008 may have a front surface 1052 and a rear surface 1054, where the front surface 1052 may be positioned closer to the imaging unit 1002 relative to the rear surface 1054. In some examples, the front surface 1052 of the calibration target 1008 may be a flat or planar surface. In some examples, the horizontal distance between the imaging unit 1002 and any area on the front surface 1052 of the calibration target 1008 may be equal. In some examples, the calibration target 1008 may be perpendicular to the imaging unit 1002. More specifically, the front surface 1052 of the calibration target 1008 may be perpendicular to the center area 1010 of the field of view FOV of the imaging unit 1002. In other examples, the calibration target 1008 may be slightly offset from perpendicular from the center area 1010. In these examples, the front surface 1052 may be flat or planar, but the horizontal distance between the imaging unit 1002 and the front surface 1052 may not be equal every area of the front surface 1052. The calibration target 1008 may move relative to the imaging unit 1002. In some examples, the calibration target 1008 may be moved by an actuator, such as an actuator 1040. In some examples, the calibration target 1008 may move relative to the base 1038. In other examples, the calibration target 1008 may not move relative to the base 1030, and the calibration target 1008 may move as the base 1038 moves. In these other examples, the calibration target 1008 may be fixedly coupled to the base 1038, the actuator 1040 may move the base 1038, and the movement of the base 1038 may move the calibration target 1008.

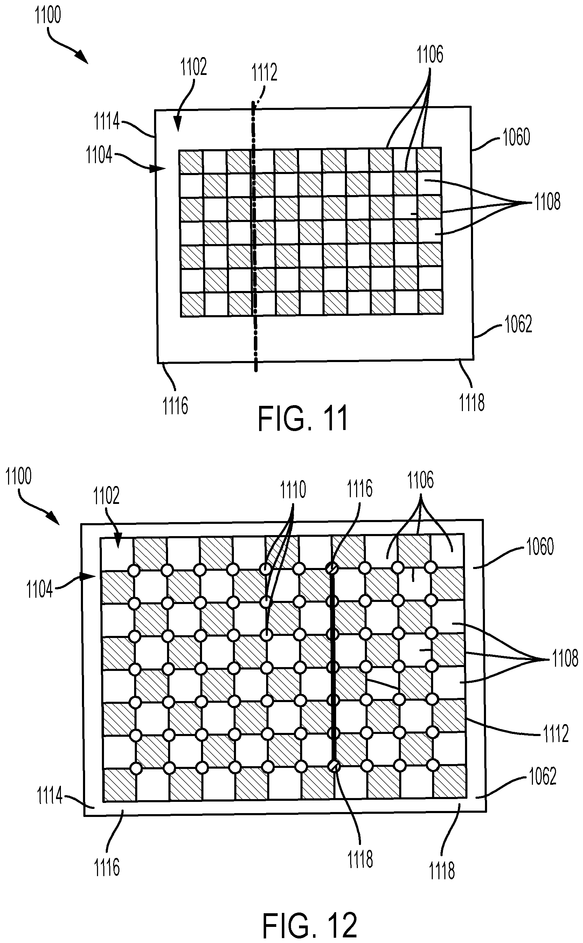

Referring now to Figs. 11-12, one example of a front surface 1114 of a calibration target 1100 is illustrated. The calibration target 1100 may include one or more rows 1104 that may extend horizontally across the calibration target 1100. The calibration target 1100 may also include one or more columns 1102 that may extend vertically across the calibration target 1100. The one or more rows 1104 and one or more columns 1102 may include areas with a first color 1106 and areas with a second color 1108. In some examples, the areas with the first color 1106 may be a darker shade of a color or a darker color relative to the areas with the second color 1108. In some examples, each row 1104 may alternate between areas with a first color 1106 and areas with a second color 1108 and each column 1102 may alternate between areas with a first color 1106 and areas with a second color 1108. In these examples, the areas with the first and second colors 1106, 1108 may be in the shape of a square. The areas with the first and second colors 1106, 1108 may be other shapes as well, such as rectangular, circular, or triangular, for example.

In some examples, the front surface 1114 of the calibration target 1100 may be visually similar to a chessboard, although the dimensions of the areas 1106, 1108 may be any size in, and there may be any number of rows 1104 and columns 1102 on the front surface 1114 of the calibration target 1100. In some examples, the calibration target 1100 may have more columns 1102 than rows 1104. In other examples, the calibration target 1100 may have more rows 1104 than columns 1102, or may have an equal number of rows 1104 and columns 1102. In the illustrative example of Fig. 11, the calibration target 1100 may have eleven columns 1102 and seven rows 1104. The calibration target 1100 may have more or less than eleven columns 1102 and more or less than seven rows 1104 in other implementations.

In some examples, the front surface 1114 of calibration board 1100 may not include alternating areas with first colors and second colors 1106, 1108. In one such example, the front surface 1114 may have an area with a first color, and the front surface 1114 may have lines with a second color. In this example, the front surface 1114 may be the first color, and the lines with the second color may be a series of intersecting lines, such as a grid pattern.

In some examples, the light 1112 from the structured light unit 1004 may contact the front surface 1114 of the calibration target 1100. In one example, the light 1112 from the structured light unit 1004 may be parallel to the columns 1102. In some examples the light 1112 from the structured light unit 1001 may not be parallel to the columns, but may extend from a top end 1160 to a bottom end 1162 of the calibration target 1100. The light 1112 from the structured light unit 1004 may include at least a first image point 1116 and a second image point 1118. In some examples, the image points 1116, 1118 may be defined as areas wherein the light 1112 from the structured light unit 1004 intersects one of the regions 1110. In some examples, there may be a plurality of areas wherein the light 1112 from the structured light unit 1004 intersects the regions 1110, and the image points 1116, 1118 may include one region 1110 positioned at or near the top end 1060 and one region 1110 that is positioned at or near the bottom end that intersect with the light from the structure light unit 1112. The row positioned closest to the top end 1060 may be referred to herein as a top row and the row directly below and adjacent to the top row may be referred to herein as the second to top row. Likewise, the row positioned closes to the bottom end 1060 may be referred to herein as the bottom row, and the row directly above and adjacent to the bottom row may be referred to herein as the second to bottom row. In some examples, the first image point 1116 may be located at an area between the top row and the second to top row, and may include part of the top row and second to top row. The second image point 1118 may be located at an area between the bottom row and the second to bottom row, and may include part of the bottom row and second to bottom row.

As illustrated in Fig. 12, regions 1110 may be located at the corner of either areas with a first color 1106 or areas with a second color 1108, or both. In some examples, the regions 1110 may be defined as the intersection of two areas with a first color 1106 and two areas with a second color 1108. In other examples, the regions 1110 may be the intersection of less than two areas of a first color 1106 or less than two areas with a second color 1108. In other examples, the regions 1110 may be located at the intersection of two or more gridlines.

The 3D position of each region 1110 on the front surface 1114 of the calibration target 1100 may be known. In one example, the dimensions of the areas with a first color 1106 and areas with a second color 1108 may be known. The dimensions may include the length, width, and height. In some examples, 3D Cartesian coordinates may be known, which may be referred to herein as (x, y, z). In some examples, the distance between any two regions 1110 on the calibration target 1110 may be known or calculated.

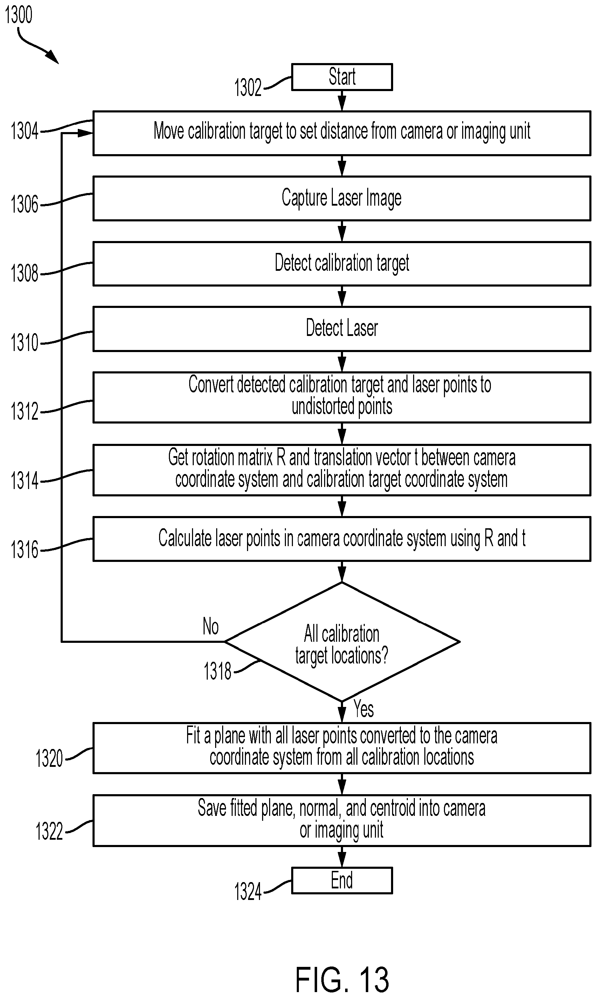

Referring now to Fig. 13, an illustrative method 1300 for calibrating light 1112 from the structured light unit 1004 (see Figs. 10-12) with the imaging unit 1002 is depicted. It should be appreciated that at last some blocks of the method 1300 may be performed manually (e.g., by one or more operators), at least in some embodiments. In other embodiments, at least some blocks of the method 1300 may be performed by an electronic control system capable of receiving input provided by one or more operators and controlling operation of various components of the calibration system 1000. In any case, the method 1300 corresponds to, or is otherwise associated with, performance of the blocks described below in the illustrative sequence of Fig. 13. It should be appreciated that the method 1300 may be performed in one or more sequences different from the illustrative sequence, and may have any number of blocks.

In some examples, calibrating light 1112 from the structured light unit 1004 with the imaging unit 1002 may enable the accurate measurement of trench depth, because the imaging unit 1002 may be offset from the structured light unit 1004 in the horizontal and/or the vertical direction. Beginning at block 1302 of the method 1300, the calibration target 1100 may be moved to a set distance from the imaging unit 1002, as illustrated in block 1304. In one example, the calibration target 1100 may be placed 16cm from the imaging unit 1002. In other examples, the calibration target 1100 may be placed closer than 16 cm from the imaging unit 1002, such as, for example, 1 cm, 2cm, 5cm, 10cm, or 15cm from the imaging unit 1002. In other examples, the calibration target 1100 may be placed farther than 16cm from the imaging unit 1002, such as, for example, 17cm, 20cm, 30cm, 45cm, or more than 45cm from the calibration target 1100.

Once the calibration target 1100 is moved to a predetermine distance from the imaging unit 1002, as in block 1304, the light 1112 from the structured light unit 1004 may be operable, or on. In some examples, a user or operator may define the predetermined distance. The light 1112 from the structured light unit 1004 may also be referred to herein as a laser 1112. Once the laser 1112 is operable, or on, the imaging unit 1002 may capture a laser image, in block 1306. The laser image may be a 2D image, and the 2D Cartesian coordinate points for the laser image may be referred to herein as (u, v). In some examples, the imaging unit 1002 may capture a laser image while the general illumination light 1006 is off, or inoperable. In other examples, the laser image may be captured while the general illumination light 1006 is on, or operable. After the imaging unit 1002 captures the image, as in block 1306, the laser image may be sent to the control and image processing unit 1012.

As illustrated in block 1308, the calibration target may be detected. In some examples, the imaging unit 1002 may capture an image 1022 and the imaging unit 1002 may communicate the image 1022 to the control and image processing unit 1012. In some examples, the calibration target may be detected, as in block 1308, by capturing a baseline image with the imaging unit 1002 and by detecting one or more regions 1110 on the calibration target 1110 of the baseline image via the control and image processing unit 1012. In one example, the baseline image may be captured while the laser 1112 is off, or non-operable. In other examples, the baseline image may be captured while the laser 1112 is on, or operable.

In block 1310, the laser 1112 may be detected. As explained above, the imaging unit 1002 may capture the image of the laser 1112, as in block 1306, and image may be communicated to the control and image processing unit 1012. The control and image processing unit 1012 may detect the laser 1112. In one example, the control and image processing unit 1012 may detect the first image point 1116 and the second image point 1118. As explained above, the first and second image points 1116, 1118 may be defined as areas where the laser 1112 intersects one of the regions 1110. In some examples, the first and second image points 1116, 1118 may include one region 1110 positioned at or near the top end 1060 of the calibration target where the laser 1112 intersects the region 1110, and may include a second region 1110 positioned at or near the bottom end 1062 of the calibration target where the laser 1112 intersects the region 1110.

Once the calibration target 1100 and the laser 1112 are detected, as in blocks 1308 and 1310, the detected calibration target 1100 and laser points may be converted to undistorted points, as in block 1312. The points on the calibration target 1100 that are converted to undistorted points may include one or more regions 1110. The laser points that are converted to undistorted points may include the first image point 1116 and the second image point 1118. In some examples, the control and image processing unit 1012 may undistort the calibration target 1100 and laser points. In some examples, a generic computer vision program may be used to undistort the calibration target 1100 and laser points. The computer vision program may include one or more undistortion calibration parameters which may be input to undistort the image.

In block 1314, a rotation matrix R and a translation vector t between the camera coordinate system and the calibration target coordinate system may be obtained. The camera coordinate system may be referred to herein as ($X_c$, $Y_c$,

$$Z_c) \text{ or } \begin{bmatrix} Xc \\ Yc \\ Zc \end{bmatrix}$$

. X, Y, and Z may refer to a 3D Cartesian coordinate point on the camera X-axis, Y-axis, and Z-axis respectively. The calibration target coordinate system, also referred to as the world coordinate system, may be expressed

$$\text{as } (X_w, Y_w, Z_w) \text{ or } \begin{bmatrix} Xw \\ Yw \\ Zw \end{bmatrix}$$

. The rotation matrix R may rotate the coordinate system between two coordinate systems such as, for example, rotating between the camera coordinate system and the calibration target coordinate system. The translation vector t may translate the coordinate system between coordinate systems, such as, for example, translating the coordinate system between the camera coordinate system and the calibration target coordinate system. The rotation matrix R and translation vector t between the world coordinate system and the camera coordinate system may be calculated or estimated via an algorithm, such as solvePnP, which is a solver for a Perspective-N-Point (PnP) problem.

In block 1316, the laser points may be calculated in the camera coordinate system using the rotation matrix R and the translation vector t between the laser point coordinate system (u, v) and the camera coordinate system ($X_c$, $Y_c$, $Z_c$). The rotation matrix R and translation vector t between the laser point coordinate system and the camera coordinate system may be referred to as $R_{LC}$ $t_{LC}$ or $R_{CL}$ $t_{CL}$. The laser point coordinate system may be calculated in the camera coordinate system, as in block 1316, using the calibration target 1100. The points (u, v) on the calibration target 1100 may be expressed in the world coordinate system of ($X_w$, $Y_w$, $Z_w$), and $Z_w$ may be 0.0 because the laser points are on the calibration target 1100. In some examples, the origin of the world coordinate system may be a corner of the calibration target 1100.

The laser point coordinates (u, v) may be converted to world coordinate system ($X_w$, $Y_w$, $Z_w$) by setting Zw to 0.0 and by using Equations 1 and 2:

$$\begin{bmatrix} Xw \\ Yw \\ Zw \end{bmatrix} = sA \begin{bmatrix} u \\ v \\ 1 \end{bmatrix} - B \qquad \text{(Equation 1)}$$

In equation 1, $\begin{bmatrix} u \\ v \\ 1 \end{bmatrix}$ may be a particular point in the laser image, $\begin{bmatrix} Xw \\ Yw \\ Zw \end{bmatrix}$ may be the position of the particular point or points in the world coordinate system, $A = \begin{bmatrix} a_0 \\ a_1 \\ a_2 \end{bmatrix} = R_{LW}^{-1} C^{-1}$ where $R_{LW}$ may be the rotation matrix between the laser coordinate system and world coordinate system and C may be the camera matrix, and $B = \begin{bmatrix} b_0 \\ b_1 \\ b_2 \end{bmatrix} = R_{LW}^{-1} \, t_{LW}$ where $t_{LW}$

may be the translation vector between the laser coordinate system and the world coordinate system. The variable s in Equation 1 may be solved using Equation 2:

$$s = \frac{(0 + b_2)}{a_2} \qquad \text{(Equation 2)}$$

Using Equations 1 and 2, the laser point coordinates (u, v) may be converted to the world point coordinate system $(X_w, Y_w, Z_w)$. Once the points are in the world point coordinate system, they may be converted to the camera coordinate system $(X_c, Y_c, Z_c)$ using Equation 3:

$$\begin{bmatrix} Xc \\ Yc \\ Zc \end{bmatrix} = R_{WC} \begin{bmatrix} Xw \\ Yw \\ Zw \end{bmatrix} + t_{WC} \qquad \text{(Equation 3)}$$

In equation 3, $\begin{bmatrix} Xc \\ Yc \\ Zc \end{bmatrix}$ may be the particular point or points in the camera coordinate system $R_{WC}$ may be the rotation matrix between the world coordinate system and the camera coordinate system, $\begin{bmatrix} Xw \\ Yw \\ Zw \end{bmatrix}$ may be the particular point or points in the world coordinate system, and $t_{WC}$ may be the translation vector between the world coordinate system and the camera coordinate system. In some examples, the control and image processing unit 1012 may calculate the laser points in the camera coordinate system using R and t, as in block 1316. In other examples, an external device may perform the calculations.

In block 1318, a controller or the control and image processing unit 1012 may determine whether all calibration target locations have been converted to the camera coordinate system. In one example, eleven locations on the calibration target 1100 may be used. In other examples, less than eleven locations may be used, such as between and including two and ten locations. In other examples, more than eleven locations may be used, such as, twelve locations, fifteen locations, twenty locations, or thirty or more locations. In some examples, the first location of the calibration target 1100 may occur at a linear distance of 16cm from the imaging unit 1002, and the calibration target may move in 1cm increments away from the imaging unit 1002 until 11 distances are measured, or until the calibration target 1100 reaches a distance of 26cm from the imaging unit 1002. In other examples, the calibration target 1100 may move in different increments from the camera, such as 2cm, 3cm, 1 in, or any other increment. In other examples, the increments in which the calibration target 1100 is moved from the imaging unit 1002 may vary. In one such example, the first location may be 16cm from the imaging unit 1002, the second location may be 17cm from the imaging unit 1002, the third location may be 20cm from the imaging unit 1002, and the fourth location may be 22 cm from the imaging unit 1002. Referring to block 1318, if additional calibration target locations are to be detected and converted, the method 1300 continues from block 1304 and the calibration target 1100 is moved a set distance from the imaging unit 1002.

If all of the calibration target locations are detected and converted to the camera coordinate system, then the method 300 may advance to block 1320, and a plane, or a laser plane $(X_P, Y_P, Z_P)$ or $\begin{bmatrix} X_P \\ Y_P \\ Z_P \end{bmatrix}$ is fitted with all the laser points that were converted to the camera coordinate system $(X_C, Y_C, Z_C)$. In other words, all of the laser points from each of the calibration locations may be converted to the camera coordinate system $(X_C, Y_C, Z_C)$. The laser plane $(X_P, Y_P, Z_P)$ and normal to the laser plane and centroid of the laser plane may be calculated using singular value decomposition (SVD). In some examples, the laser plane $(X_P, Y_P, Z_P)$, normal to the laser plane, and centroid of the laser plane may be calculated via the control and image processing unit 1012. In other examples, the calculations may be performed by an external device. As provided in block 1322, the laser plane $(X_P, Y_P, Z_P)$, normal of the laser plane, and centroid to the laser plane may be saved into the imaging unit 1002, and may be saved, more particularly, into EEPROM of the imaging unit 1002. In some examples, the laser plane, normal of the laser plane, and centroid to the laser plane may be saved in the control and image processing unit 1012. In one example, the laser plane and centroid may be saved in an external device. After the laser plane, normal to the laser plane, and centroid of the laser plane are saved into the imaging unit 1002, the method 1300 may end, as in block 1324.

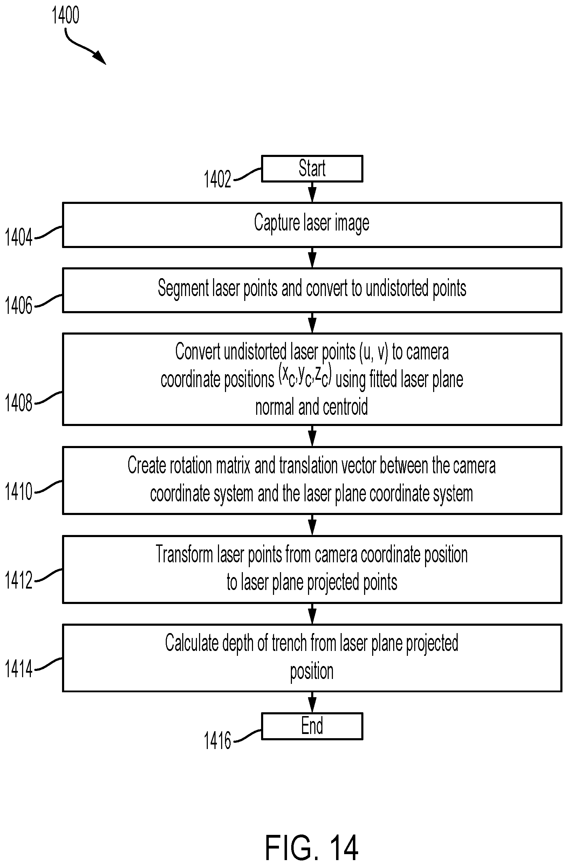

Referring now to Fig. 14, one example of a method 1400 for measuring trench depth is illustrated. The method 1400 may start with block 1402, and a laser image may be captured, as in block 1404. The laser image may include a laser from the structured light unit 64 which may be projected at least on the trench or furrow 192 (see Figs. 1-6). In some examples, the laser may be projected on or adjacent to the trench or furrow 192. The laser image may be captured by the imaging unit 62 and may be communicated to the control and image processing unit 1012, or another computer of processing unit.

As provided in block 1406, the laser image points may be segmented and converted to undistorted points. A control and image processing unit may segment the points and convert the points to undistorted points. In other examples, an external device, such as a computer or external processing unit, may segment the laser image points and convert the points to undistorted points. When segmenting the laser image points, the image may be a pixel image, and the laser pixels in the pixel image may have a different color than the area surrounding the laser pixels. In one non-limiting example, the laser pixels may be green and the area surrounding the laser pixels may be black; however, other colors may be used for the laser and surrounding area. The laser pixels may be segmented out of the pixel image based on comparing the individual pixels to the surrounding pixels. In some examples, the control and image processing unit 1012 may undistort the calibration target and laser points, although another processing unit or computer may also be used. In some examples, one or more generic computer vision programs may be used to undistort the calibration target 1100 and laser points, either within the control and image processing unit 1012 or remote relative thereto. The computer vision program may include one or more undistortion calibration parameters which may be applied to undistort the image.

The undistorted points (u, v) may then be converted to camera coordinate points $(X_C, Y_C, Z_C)$ using the fitted laser plane normal and centroid, as in block 1408, where the laser plane normal and centroid may be calculated and saved as explained in blocks 1320 and 1322 of method 1300. In some examples, the normal may be expressed as $\vec{n} = (a, b, c)$ and the centroid may be expressed as $(x_c, y_c, z_c)$. The laser plane in camera coordinate system may be expressed as shown in Equation 4:

$$ax + by + cz + d = 0 \qquad \text{(Equation 4)}$$

In Equation 4, d may refer to the distance between the origin of the camera coordinate $(X_C, Y_C, Zc)$ and the laser plane $(X_P, Y_P, Z_P)$, and because the centroid $(x_c, y_c, z_c)$ may be on the plane, d may be expressed as shown in Equation 5:

$$d = -(ax_c + by_c + cz_c) \qquad \text{(Equation 5)}$$

Using Equations 6 and 7 below, laser image (u, v) may be converted to camera coordinate system $(X_C, Y_C, Z_C)$:

$$\mathbf{s} \begin{bmatrix} u \\ v \\ 1 \end{bmatrix} = \mathbf{C} \begin{bmatrix} Xc \\ Yc \\ Zc \end{bmatrix} \qquad \mathbf{C} = \begin{bmatrix} fx & 0 & cx \\ 0 & fy & cy \\ 0 & 0 & 1 \end{bmatrix} \text{(Equation 6)}$$

$$\begin{bmatrix} X_c \\ Y_c \\ Z_c \end{bmatrix} = \mathbf{s} \begin{bmatrix} X_i \\ Y_i \\ Z_i \end{bmatrix} \qquad \mathbf{s} \begin{bmatrix} X_i \\ Y_i \\ Z_i \end{bmatrix} = \mathbf{s}\mathbf{C}^{-1} \begin{bmatrix} u \\ v \\ 1 \end{bmatrix} \text{(Equation 7)}$$

In Equations 6 and 7, $\begin{bmatrix} u \\ v \\ 1 \end{bmatrix}$ may be the undistorted points, $\begin{bmatrix} Xc \\ Yc \\ Zc \end{bmatrix}$ may be the position in the camera coordinate system, C may be the camera matrix, $(f_x, f_y)$ may be the focal length, and $(c_x, c_y)$ may be the principal point. The variable s may be unknown, and because $(sX_i, sY_i, sZ_i)$ is on the laser plane $(X_P, Y_P, Z_P)$, Equation eight may be established:

$$saX_i + sbY_i + scZ_i + d = 0 \qquad \text{(Equation 8)}$$

Solving for s in Equation 8 yields Equation 9:

$$\mathbf{s} = -\frac{d}{aX_i + bY_i + cZ_i} \qquad \text{(Equation 9)}$$

With Equations 4-9, the undistorted laser position (u, v) may be converted to the camera coordinate positions $(X_C, Y_C, Z_C)$ using the laser plane, normal, and centroid, as in block 1408.

Now, referring to block 1410, the rotation matrix and translation vector may be defined between the camera coordinate system and laser plane coordinate system. The rotation matrix and translation vector between the laser plane coordinate system $(X_P, Y_P, Z_P)$ and the camera coordinate system $(X_C, Y_C, Z_C)$ may be referred to as $R_p$ and $t_p$ respectively. Direction Cosine Matrix may be used to calculate $R_p$, although other methods may also be used. The translation vector $t_p$ may be determined by converting the origin of the laser plane coordinate system $(X_P, Y_P, Z_P)$ to the origin point in the camera coordinate system $(X_C, Y_C, Z_C)$, and the origin point of the camera coordinate system $(X_C, Y_C, Z_C)$ may be the translation vector $t_p$. The origin of the laser plane coordinate system $(X_P, Y_P, Z_P)$ may be anywhere on the laser plane coordinate system $(X_P, Y_P, Z_P)$. In one example, the laser plane coordinate system centroid may be selected as the origin. The Direction Cosine Matrix is one method to determine $R_p$. In some examples, the 3D axis on the laser plane coordinate system may be expressed as Equation 10:

$$\mathbf{R}_p = \begin{bmatrix} \vec{l}, \vec{m}, \vec{n} \end{bmatrix} \qquad \text{(Equation 10)}$$

In Equation 10, $\vec{l}$ may be the unit vector of the X-axis of the laser plane coordinate system, $\vec{m}$ may be the unit vector of the Y-axis of the laser plane coordinate system, and $\vec{n}$ may be the unit vector of the Z-axis of the laser plane coordinate system. In some examples, $\vec{n}$ may be calculated by SVD. In some examples, $\vec{l}$ may be defined by selecting two points, a first point and a second point, on the laser image that form a vertical line in the laser image, converting the first point and second point to the camera coordinate system $(X_C, Y_C, Z_C)$ with Equation 7, and subtracting the second point from the second point. In this example, the origin of the laser plane coordinate system, referred to herein as $O_P$, may a mid-point between the first point and the second point. As stated above, the origin of the camera coordinate system may be the translation vector, so $t_p$ may equal $O_P$. In Equation 10, the variable $\vec{m}$, which is the Y-axis unit vector, may be calculated as the cross-product of $\vec{n}$ and $\vec{l}$. $R_P$ may be calculated by inserting $\vec{l}$, $\vec{m}$, and $\vec{n}$ into Equation 10 and solving the equation. Thus, the translation vector between the camera coordinate system and the laser plane coordinate system $t_P$ and the rotation matrix between the camera coordinate system and the laser plane coordinate system $R_P$ may be calculated, as in block 1410.

In block 1412, the laser points from the camera coordinate position (Xc, Yc, Zc) may be transformed to the laser plane $(X_P, Y_P, Z_P)$. Converting the camera coordinate system $(X_C, Y_C, Z_C)$ to laser coordinate system $(X_P, Y_P, Z_P)$, as in block 1412, may be converted using Equations 11 and 12:

$$\begin{bmatrix} X_c \\ Y_c \\ Z_c \end{bmatrix} = R_p \begin{bmatrix} X_p \\ Y_p \\ Z_p \end{bmatrix} + t_p \qquad \text{(Equation 11)}$$

$$\begin{bmatrix} X_p \\ Y_p \\ Z_p \end{bmatrix} = R_p^{-1} \begin{bmatrix} X_c \\ Y_c \\ Z_c \end{bmatrix} - R_p^{-1} t_p \qquad \text{(Equation 12)}$$

In Equations 11 and 12, $\begin{bmatrix} X_c \\ Y_c \\ Z_c \end{bmatrix}$ may be the camera coordinate position, $R_p$ may be the rotational matrix between

$$\begin{bmatrix} X_p \\ Y_p \\ Z_p \end{bmatrix}$$

the camera coordinate system and the laser plane coordinate system, $\begin{bmatrix} X_p \\ Y_p \\ Z_p \end{bmatrix}$ may be the position in the laser plane coordinate system, and $t_p$ may be the translation vector between the camera coordinate system and the laser plane coordinate system. The depth of the trench from the laser plane coordinate system may be calculated, as in block 1414. In some examples, the trench or furrow depth 192 (see Fig. 4) may be calculated by the control and image processing unit 1012. In one example, the calculations may be performed via an external device. Once the trench or furrow depth 192 is calculated, the method 1400 may end 1416.

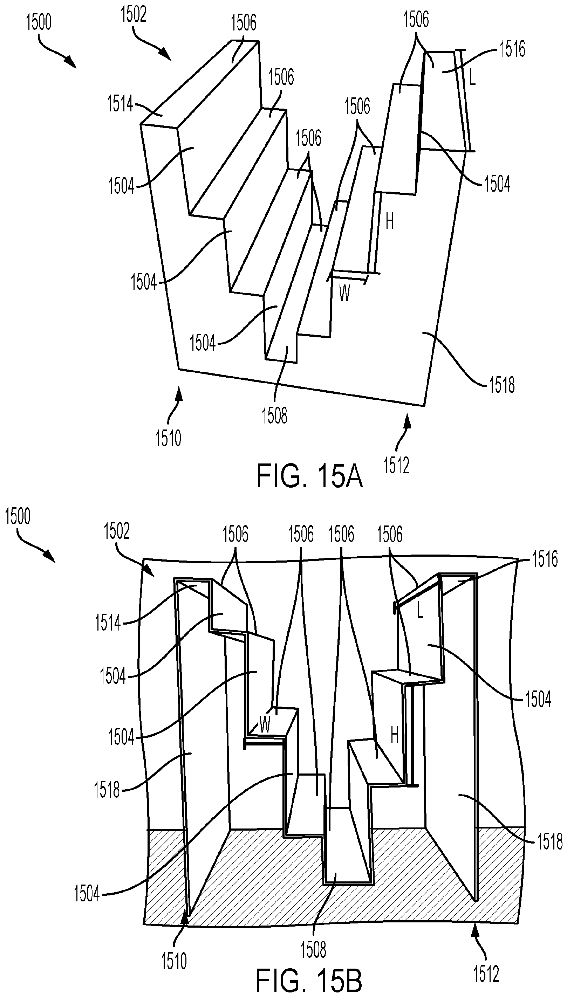

Referring now to Figs. 15a-b, a validation target 1500 is illustrated. The validation target 1500 may be defined by a plurality of steps 1502, each of the plurality of steps 1502 may include a riser 1504 and a top surface 1506. Each top surface 1506 may have a length L and width W. Each riser 1504 may have the length L and a height H. In some examples, the validation target 1500 may have a bottom step 1508. The bottom step 1508 may have only the top surface 1506 with no riser 1504 located below it. According to some examples, the validation target 1500 may have a first plurality of steps on a first side and a second plurality of steps on a second side. In these examples, the first and second plurality of steps may extend from and ascend relative to the bottom step. In some examples, the bottom step 1508 may have both the top surface 1506 and a riser 1504 located below the top surface 1506 of the bottom step 1508.

The length L and width W of each top surface 1504, and the height H and length L of each riser 1504 may be known. In some examples, the length L and width W of the top surfaces 1506 may be equal. In other examples, the length L and width W may vary between top surfaces 1506 of the plurality of steps 1502. In one example, one of the length L or width W of the top surface 1506 may be equal throughout the validation target 1500 and the other of the length L or width W may vary. In some examples, there may be two groups of steps 1502 wherein the length L and width W of the top surfaces 1506 of the first group of steps 1502 may be equal, and the length L and width W of the top surfaces 1506 of the second group of steps 1502 may vary relative to the first group. In some examples, there may be more than two groups of steps 1502, and the length L and/or the width W of the top surface 1506 may vary between the more than two groups. Referring now to the risers 1504, the length L of each riser may be equal, and the height H may vary between one or more risers 1504. In one example, the height H and length L of each riser 1504 may be equal. In other examples, the height H and length L may vary between risers 1504. In some examples, there may be two groups of risers 1504 in the validation target 1500, the first group of risers 1504 may have an equal height H and length L, and the second group of risers 1504 may have a height H and/or length L that varies relative to the first group. In one example, the validation target 1500 may have more than two groups of risers 1504 and the height H and/or length L may vary between the or more two groups.

The validation target 1500 may have a first side 1510 and a second side 1512. In one example, the validation target 1500 may resemble two staircases, or collection of steps 1502, wherein the first side 1510 of the validation target 1500 resembles a descending staircase that begins at a first top step 1514 and ends on the bottom step 1508. The second side 1512 of the validation target 1500 may resemble an ascending staircase that begins at the bottom step 1508 and ends at a second top step 1516. In one example, the first side 1510 may have more steps 1502 than the second side 1512. In another example, the first side 1510 may have less steps 1502 than the second side 1512. In a third example, the first and second sides 1510, 1512 may have an equal number of steps 1502. As is shown in the example of Fig. 15a, the first side 1510 may have four steps 1502, including the first top step, the bottom step 1508, and two steps 1502 therebetween. In some examples the first side 1510 may have less than four steps 1502. In other examples, the first side 1510 may have more than four steps 1502. Also illustrated in Fig. 15a, the second side 1512 may have 5 steps 1502, including the bottom step 1508, the second top step 1516, and the three steps 1502 therebetween. In other examples, the second side 1512 may have more than five steps 1502 or less than five steps 1502.

The validation target 1500 may also have one or more walls 1518. In one example, the validation target 1500 may have four walls 1518 with a first wall on the first side 1510, a second wall 1518 on the second side 1512, and two walls 1518 on opposing ends of the validation target 1500 and extending between the first wall and second wall. In another example, as illustrated in Fig. 15b, the validation target 1500 may have only two walls 1518, with one wall 1518 on the first side 1510 and another wall 1518 on the second side 1512. In some examples, one or more walls 1518 may extend below the bottom step 1508. In other examples, one or more walls 1518 may extend to, but not past, the bottoms step 1508.

The validation target 1500 may be used to validate whether the calibration of the imaging unit 1002 and the structured light unit 1004 is within a predetermined accuracy threshold. In some examples, the validation may be performed in a controlled environment, such as a laboratory or another type of workroom.

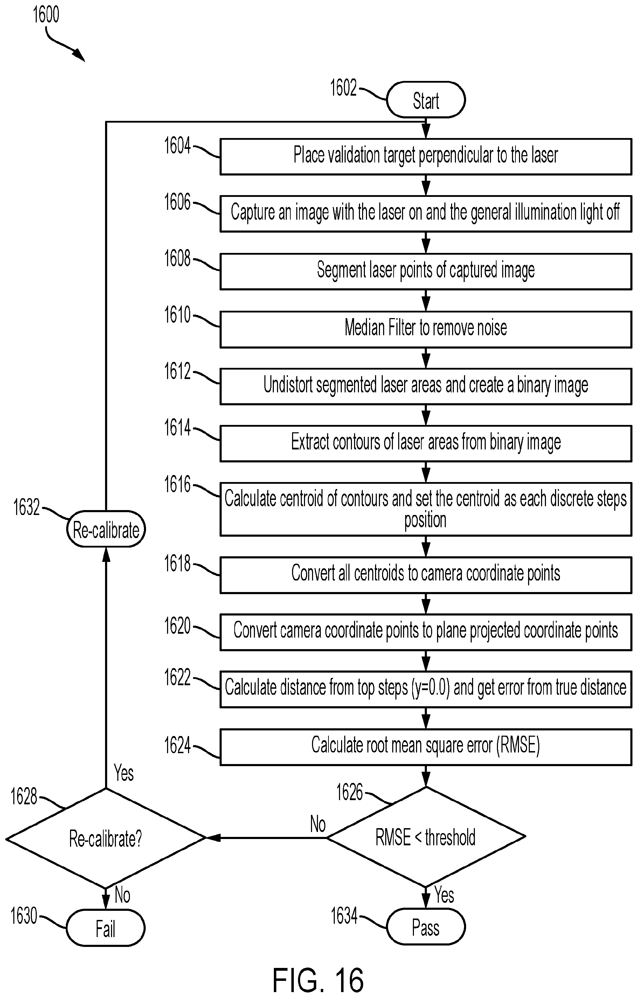

Referring now to Fig. 16, one example of a calibration validation method 1600 is illustrated. The method 1600 may include any number of blocks and the blocks may be executed in any order. In some implementations, there may be more or less blocks than those illustrated in Fig. 16. The calibration validation method 1600 may be used to determine whether the calibration of the imaging unit and the structured light unit 1004 is within a predetermined accuracy threshold. The method 1600 may begin with block 1602, and the validation target 1500 may be placed perpendicular to the laser 1030, as in block 1604. In some examples, the validation target 1500 may be placed at any predetermined angle relative to the validation target 1500. According to one example, when the validation target 1500 is perpendicular to the laser 1030 an image 1022 may be captured with the laser 1030 on and the general illumination light 1006 off, as in block 1606. The image 1022 may be captured with the imaging unit 1002. In one example, laser 1030 may span from the first side 1510 of the validation target 1500 to the second side 1512. In other words, the laser 1030 may extend from at least the first top step 1514 to the second top step 1516, and the laser 1030 may at least partially contact the top portion of each step 1502 of the validation target 1500. In some examples, the imaging unit 1002 may communicate the image 1022 to the control and image processing unit 1012. The field of view FOV of the imaging unit 1002 may be an area that includes at least the first top step 1514, the second top step 1516, and each step 1502 of the validation target 1500 therebetween.

The laser areas or points of the captured image 1022 may then be segmented, as in block 1608. In some examples, the control and image processing unit 1012 may segment the laser areas or points of the captured image. In other examples, an external device may segment the areas or points. When segmenting the areas or points, the image may be a pixel image, and the laser pixels in the pixel image may have a different color than the area surrounding the laser pixels. In one example, the laser pixels may be green and the area surrounding the laser pixels may be black; however, other colors may be used for the laser and surrounding area. The laser pixels may be segmented out of the pixel image based on the pixel image. In some examples, the entire portion of the laser 1030 that was captured in the image 1022 may be segmented. In other examples, only a portion of the laser 1030 that was captured in the image 1022 may be segmented.

In block 1610, noise may be removed from the image 1022 via a median filter. Any type of median filter known in the art that improves results of the image 1022 may be used. Noise may refer to an unwanted disturbance, a variation, or any other type of undesirable by-product in the image 1022. Noise may include, for example, grainy spots, colorful dots or pixels, or a variation of brightness or color information in the image 1022. In some examples, the control and image processing unit 1012 may implement the median filter. The control and image processing unit 1012 may execute an algorithm, and the algorithm may implement median filtering on the image 1022. In other examples, an external device may implement the median filter.

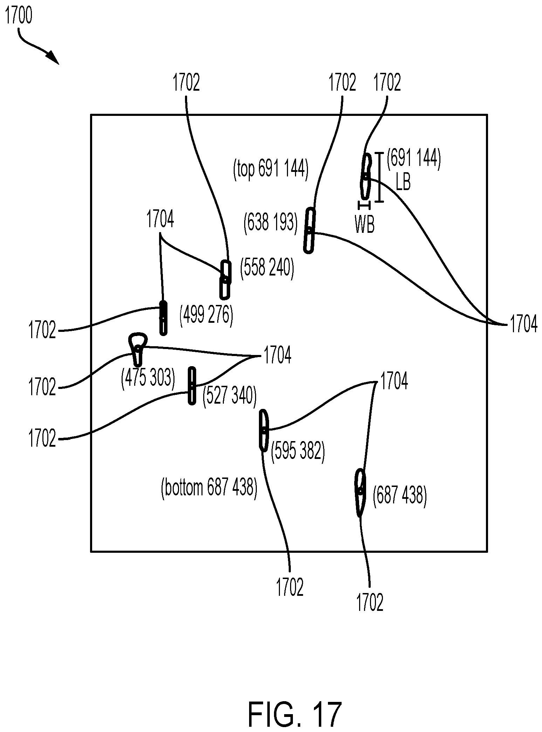

In block 1612, the segmented laser points or areas may be undistorted and a binary image 1700 may be created. In some examples, the control and image processing unit 1012 may undistort the laser points or area and create the binary image 1700. The generic computer vision program may be used to undistort laser points or area, either within the control and image processing unit 1012 or remote relative to the control and image processing unit 1012. The computer vision program may include one or more undistortion calibration parameters which may be applied to undistort the image. One example of a binary image 1700 is illustrated in Fig. 17, and the binary image 1700 may be created from the undistorted laser points. The binary image 1700 may include a plurality of laser areas 1702 and each laser area may have a centroid 1704. The plurality of laser areas 1702 may represent portions of the top surface 1506 of the validation target 1500 that are contacted by the laser 1030 and are captured in the image 1022.

Referring again to Fig. 16, in block 1614 of method 1600, the contours of the laser areas 1702 may be extracted from the binary image 1700. The contours of the laser areas 1702 may refer to one or more characteristics of each laser area 1702, such as, for example, the length LB and/or the width WB of each laser area 1702. In some examples, the length LB and width WB may change throughout the laser area 1702, and the changing characteristics of the laser areas 1702 may be considered in determining and extracting the contours. In some examples, the control and image processing unit 1012 may detect and extract the contours of the laser areas 1702 from the binary image 1700. In another example, an external device may detect and extract the contours.

In block 1616, the centroid 1704 of each contour may be calculated, and the centroid may be set as the position of each discrete step 1502. The control and image processing unit may calculate the centroid 1704 of each contour and set the centroid 1704 as the position of each step 1502. In the example of Fig. 17, there may be eight steps 1502 and eight corresponding laser areas 1702. The centroid 1704 of the contour of each laser area 1702 may be calculated, and may result in eight centroids 1704 that correspond to the eight steps 1502. However, there may be more than eight steps 1502 in other examples, and thus more than eight corresponding laser areas 1702. In other examples, there may be less than eight steps and less than eight corresponding laser areas 1702.

In block 1618, all centroids may be converted to camera coordinate points $(X_C, Y_C, Z_C)$. The calculations for the conversion of the centroids between undistorted laser points to camera coordinate points (Xc, Yc, Zc) may be performed by the control and image processing unit 1012 or via an external device, as described above. In one example, the centroids 1704 may be converted between undistorted laser points (u, v) to camera coordinate points $(X_C, Y_C, Z_C)$ by setting the Z-axis to zero, converting the centroids 1704 to world coordinate points $(X_W, Y_W, Z_W)$ via Equations (1) and (2), and converting the world coordinate points $(X_W, Y_W, Z_W)$ to camera coordinate points (Xc, Yc, Zc) via Equation (3).

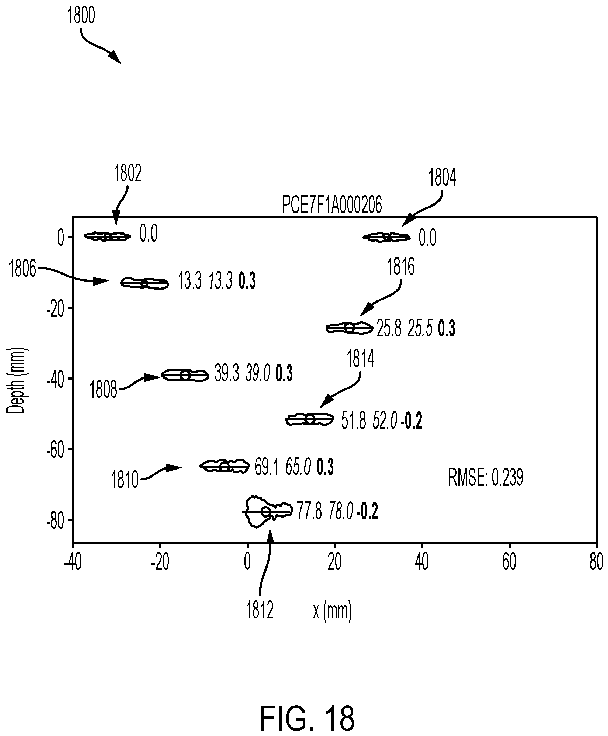

Referring now to block 1620, the camera coordinate points $(X_C, Y_C, Z_C)$ may be converted to plane projected points $(X_P, Y_P, Z_P)$ by the control and image processing unit 1012 or an external device. In some examples, this conversion may be performed as described above. In one example, the laser points may be converted from the camera coordinate position $(X_C, Y_C, Z_C)$ to the laser plane $(X_P, Y_P, Z_P)$ via Equations 11 and 12. Once the centroid of the contours of the laser areas 1702 are converted to the plane projected coordinate points $(X_P, Y_P, Z_P)$, as in block 1616 through block 1620, the plane projected coordinate points $(X_P, Y_P, Z_P)$ may be plotted in 2D because $Z_P$ may be zero. One example of a plot of the 2D points is provided in Fig. 18.

As illustrated in Fig. 18, the 2D plot of the plane projected coordinate points 1800, also referred to herein as the 2D plot 1800, may include a first top step 1802, a second top step 1804, and steps therebetween. In one example, the 2D plot 1800 may include a first top step 1802, a second step 1806, a third step 1808, a fourth step 1810, a fifth step or bottom step 1812, a sixth step 1814, a seventh step 1816, and an eighth step or second top step 1804. The steps 1802, 1804, 1806, 1808, 1810, 1812, 1814, 1816 may correspond to steps in the validation target 1500.

In one example, the centroid of the first top step 1802 and the second top step 1804 may have a height H relative to the centroid of the bottom step 1812, and the height H of the centroid of the first top step 1802 may be the same as the height H of the centroid of the second top step 1804. In this example, the centroid of the first top step 1802 and second top step 1804 may define a zero point of the 2D plot 1800. However in other examples, the centroid of the first top step 1802 and the centroid of the second top step 1804 may have different heights H from the centroid of the bottom step 1812, and one of the centroid of the first top step 1802 or centroid of the second top step 1804 may define the zero point of the Y-axis. In some examples, the Y-axis may correspond to the depth of the centroid relative to one or more of the centroid of the first top step 1802 or the second top step 1804. In other examples, another point may be selected as the zero-point of the Y-axis. The depth of any of the centroid points may be the total height H the centroid point is from the zero point of the Y-axis, or the height H between the centroid point of the step and the centroid of the first or second top steps 1802, 1804. The depth of the points, other than the first top step 1802 and second top step 1804 may be a negative number, because each centroid point may be below the centroid of the first and second top steps 1802, 1804 which define the zero point of the Y-axis. The centroid of the first and second top steps 1802, 1804 may have a depth of zero because the centroid of the first and second top steps 1802, 1804 may define the zero point of the Y-axis. In some examples, the X-axis may correspond to the distance between the centroid point of each step and the centroid of the bottom step 1812. In some examples, the X-axis may correspond to the distance between the point and the first side 1510 or second side 1512. In one example, the distance and depth may be measured in millimeters. However, the distances may be measured in centimeters, inches, any combination thereof or any combination of other units of distance. In one example, the origin of the 2D plot 1800 may be a point on the 2D plot 1800 where a vertical line, or a line parallel to the Y-axis, from the centroid of the bottom step 1812 intersects the zero point of the Y-axis.

Referring back to block 1622 of Fig. 16, the distance from the top steps 1802, 1804 may be calculated and the error from the true distance may be computed by the control and image processing unit 1012 or via an external device. A measuring step may refer to the step or steps in which the distance from the first or second top step 1802, 1804 is being measured. The distance from the top steps 1802, 1804 in block 1622 may refer to the calculated distance along the Y-axis between the centroid of the measuring step and the zero point of the Y-axis. This calculated distance may also be referred to as the calculated depth. In one example, the calculated distance, or the calculated depth, may be computed by subtracting the Y-value of the centroid of the measuring step from the Y-value of the first and/or second top step 1802. In some examples, the Y-value of the first and second step may be zero, so the calculate distance, or calculated depth, may be the Y-axis value of the centroid of the measuring step.

By way of example, as illustrated in Fig. 18, the calculated distance, or calculated depth, between the centroid of the first or second top step 1802, 1804 and the centroid of the second step 1806 may be 13.3mm. The measured Y-axis distance, or depth, between the centroid of the first or second top step 1802, 1804 and the centroid of the third step 1808 may be 39.3mm. The measured Y-axis distance, or depth, between the centroid of the first or second top step 1802, 1804 and the centroid of the fourth step 1810 may be 65.1mm. The measured Y-axis distance, or depth, between the centroid of the first or second top step 1802, 1804 and the centroid of the fifth step, or bottom step 1812, may be 77.8mm. The measured Y-axis distance, or depth, between the centroid of the first or second top step 1802, 1804 and the centroid of the sixth step 1814 may be 51.8mm. The measured Y-axis distance, or depth, between the centroid of the first or second top step 1802, 1804 and the centroid of the seventh step 1816 may be 25.8mm.

The error from the true distance may be computed by comparing the calculated distance from the known distance at each step 1806-1816. As previously mentioned, the actual Y-axis distance, or depth, between the first and/or second top steps 1802, 1804 and each other step 1806-1816 may be known.

As illustrated in the example of Fig. 18, the true distance between the first or second top step 1802, 1804 and the second step 1806 may be 13.0mm. The true distance between the first or second top step 1802, 1804 and the third step 1808 may be 39.0mm. The true distance between the first or second top step 1802, 1804 and the fourth step 1810 may be 65.0mm. The true distance between the first or second top step 1802, 1804 and the fifth, or bottom step 1812 may be 78.0mm. The true distance between the first or second top step 1802, 1804 and the sixth step 1814 may be 52.0mm. The true distance between the first or second top step 1802, 1804 and the seventh step 1816 may be 25.5mm.

Thus, subtracting the true distances from the calculated distances may yield the error. Using Fig. 18 as an example, the error for the second step 1806 may calculated by subtracting the true distance of 13.0mm from the calculated distance of 13.3mm, yielding an error of 0.3mm. The error for the third step 1808 may calculated by subtracting the true distance of 39.0mm from the calculated distance of 39.3mm, yielding an error of 0.3mm. The error for the fourth step 1810 may calculated by subtracting the true distance of 65.0mm from the calculated distance of 65.1mm, yielding an error of 0.1mm. The error for the fifth, or bottom step 1812 may be calculated by subtracting the true distance of 78.0mm from the calculated distance of 77.8mm, yielding an error of -0.2mm. The error for the sixth step 1814 may calculated by subtracting the true distance of 52.0mm from the calculated distance of 51.8mm, yielding an error of -0.2mm. The error for the seventh step 1806 may calculated by subtracting the true distance of 25. 5mm from the calculated distance of 25.8mm, yielding an error of 0.3mm.

In block 1624, the root mean square error (RMSE) may be calculated by the control and image processing unit 1012 or by an external unit. As illustrated in Fig. 18, the RMSE of the error points for steps 1806-1816 may be 0.239. A threshold RMSE value may be provided. In block 1626, the threshold RMSE value may be compared to the calculated RMSE value by the control and image processing unit 1012 or by an external device. In some examples, when the calculated RMSE value is less than the threshold RMSE value, then the calibration is validated, and the validation passes, as indicated in block 1634. In some examples, when the calculated RMSE value is greater than or equal to the threshold RMSE value, then a determination of whether to re-calibrate the imaging unit 1002 and the structured light unit 1004 is made. If it is determined to not re-calibrate the imaging unit 1002 and the structured light unit 1004, then the validation fails, as in block 16230. If it is determined to re-calibrate the imaging unit 1002 and the structured light unit 1004, then recalibration occurs, as in block 1632, and the calibration validation method 1600 continues by placing the target perpendicular to the laser 1030, as in block 1604.

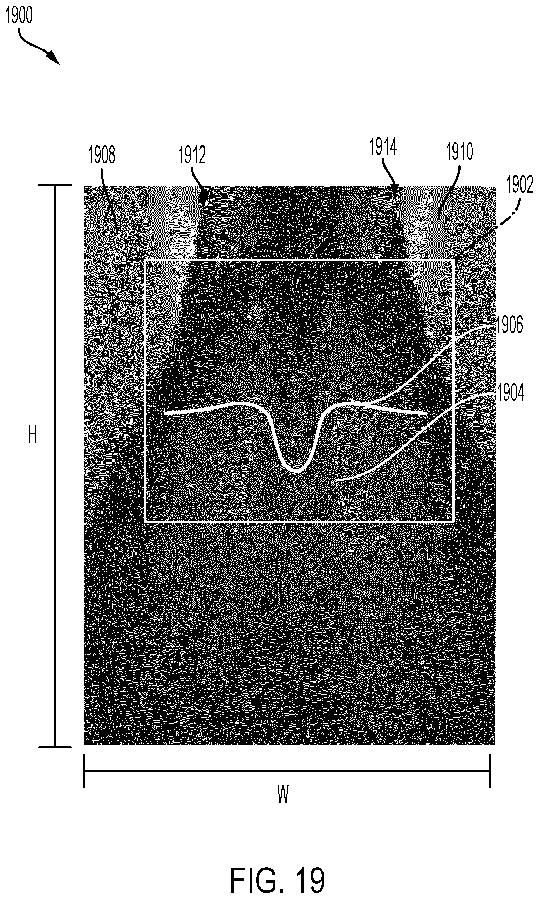

The calculations in blocks 1618, 1620, 1622, 1624, and 1628 may be done via the control and image processing unit 1012. In some examples, the calculations in blocks 1618 through 1628 may be calculated by an external device. In one example, some calculations may be done via the control and image processing unit 1012 and other calculations may be done via an external device. Now referring to Fig. 19, one example of an image 1900 taken from the imaging unit 1002 is illustrated and the image 1900 may have a height H and width W. The image 1900 may include a region of interest ("hereinafter "ROI") 1902, a trench or furrow 1904, a laser 1906, a first shield 1908, and a second shield 1910. The ROI 1902 may include a section of the image 1900, and the ROI 1902 may include at least part of the furrow or trench 1904, at least part of the laser 1906, and at least part of the first and second shields 1908, 1910. In some examples, the ROI 1902 may appear on the image 1900, as illustrated in Fig. 19. In other examples only the ROI 1902 section of the image 1900 may appear, and the sections of the image 1900 that are not within the ROI 1902 may be cropped out or may otherwise not appear.

The ROI 1902 may include a portion of the trench or furrow 1904 captured in the image 1900 and a portion of the laser 1906 captured in the image 1900. In some examples, the ROI 1902 may include a portion of the height H and a portion of the width W of the image 1900. In some examples, the ROI 1902 may include the entire trench or furrow 1904 captured in the image 1900, and may include a portion of the laser 1906 captured in the image 1900. In one implementation of these examples, the ROI 1902 may include the entire height H of the image 1900 and a portion of the width W of the image 1900. In some examples, the ROI 1902 may include the entire laser 1906 captured in the image 1900 and a portion of the trench or furrow 1904 captured in the image 1900. In these examples, the ROI 1902 may include the entire width of the image 1900 and a portion of the height H of the image 1900.

A portion of the first shield 1908 and/or a portion of the second shield 1908 may be within the ROI 1902. In some examples, no portion of the first shield 1908 and no portion of the second shield 1902 may be included in the ROI 1902. The first shield 1908 may have a first notch 1912 and the second shield 1910 may have a second notch 1914. In some examples, at least part of the first notch 1912 and at least part of the second notch 1914 may be within the ROI 1902. In other examples, only one of the first or second notch 1912, 1914 may be within the ROI 1902. In still other examples, neither of the first notch 1912 nor the second notch 1914 may be within the ROI 1902. The first and second shields 1908, 1910 may limit noise from light and dust in the image 1900. In other words, the first and second shields 1908, 1910 may prevent or limit light and dust from entering the field of view of the imaging unit 62 (see Fig. 1). Limiting light and dust from entering the field of view of the imaging unit 62 may increase the quality of the image 1900 by reducing noise or other undesired disturbance of the image 1900.

The laser 1906 may intersect or be located at least partially on the trench or furrow 1904, and a portion of the laser 1904 may be within the ROI 1902. In some examples, the entire laser 1906 captured in the image 1900 may be within the ROI 1902. In other examples, a portion of the laser 1906 captured in the image 1900 may be within the ROI 1902. In some examples, the entire portion of the laser 1906 located on the trench or furrow 1904 may in the in ROI 1902. In some implementations, a portion of the laser 1906 may be located on the trench or furrow 1904 may be in the ROI 1902.

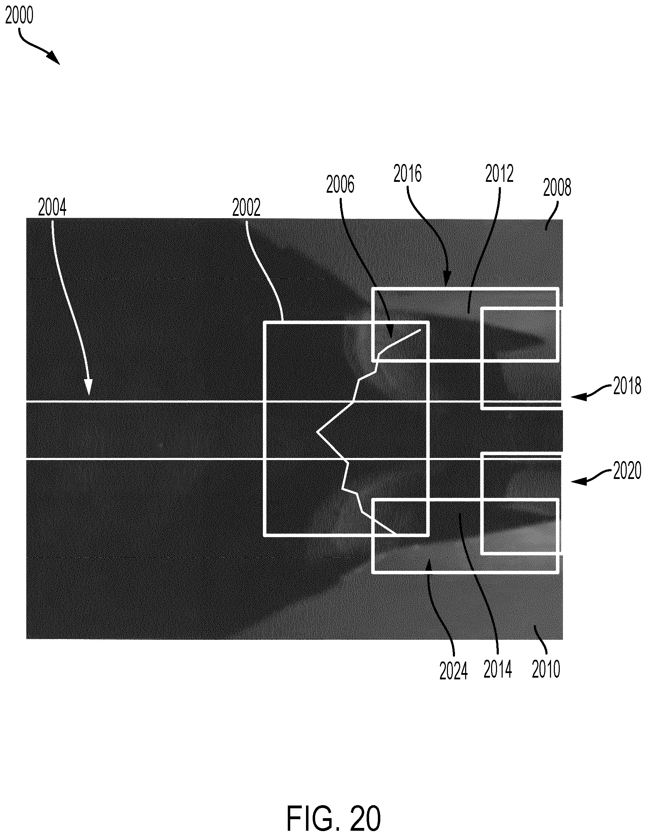

Referring now to Fig. 20, another example of an image 2000 taken by the imaging unit 62 is illustrated. The image 2000 may be similar to image 1900 and may have an ROI 2002, a trench or furrow 2004, a laser 2006, a first shield 2008 with a first notch 2012, and a second shield 2010 with a second notch 2014. The ROI 2002 may include a section of the image 2000, and the ROI 2002 may include at least part of the furrow or trench 2004, at least part of the laser 2006, and at least part of the first and second shields 2008, 2010. The image 2000 may also include the first notch 2012 and the second notch 2014, and in some examples the ROI 2002 may include at least part of the first and/or second notch 2012, 2014.

The image 2000 may additionally have a top side template ROI 2016, a top corner template ROI 2018, a bottom corner template ROI 2020, and a bottom side template ROI 2024. While four template ROIs are mentioned herein, the image 2000 may have less than four template ROIs or more than four template ROIs. The top side template ROI 2016 may include at least a portion of the first shield 2008 and at least portion of the first notch 2012. In some examples, the top side template ROI 2016 may include the entire first notch 2012. In other examples, the top side template ROI 2016 may not include the first notch 2012. The top corner template ROI 2018 may include at least a portion of the first shield 2008 and at least a portion of the first notch 2012. In one example, the top corner template ROI 2018 may not include the first notch 2012. In some examples, a portion of the top side template ROI 2016 may intersect with a portion of the top corner template ROI 2018. In other examples, the top side template ROI 2016 may not intersect with the top corner template ROI 2018. The bottom corner template ROI 2020 may include at least a portion of the second shield 2010 and at least a portion of the second notch 2014. In one example, the bottom corner template ROI 2020 may not include the second notch 2014. In some examples, the bottom corner template ROI 2020 may intersect at least a portion of the top corner template ROI 2018. In other examples, the bottom corner template ROI 2020 may not intersect with the top corner template ROI 2018. The bottom side template ROI 2024 may include at least a portion of the second shield 2010 and at least a portion of the second notch 2014. In some examples, the bottom side template ROI 2024 may not include the second notch 2014. In some examples, the bottom side template ROI 2024 may include the entire second notch 2014. In some examples, the bottom side template ROI 2024 may intersect at least a portion of the bottom corner template ROI 2020. In other examples, the bottom side template ROI 2024 and the bottom corner template ROI 2020 may not intersect.

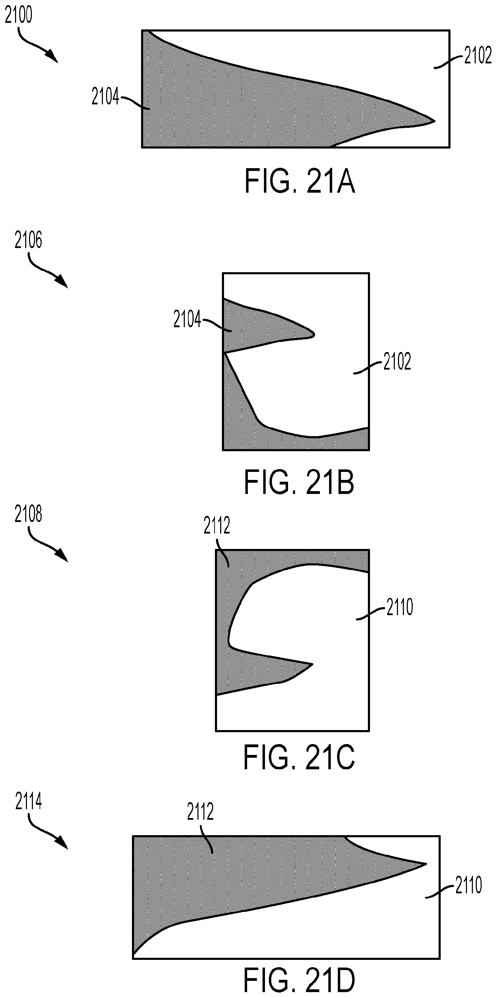

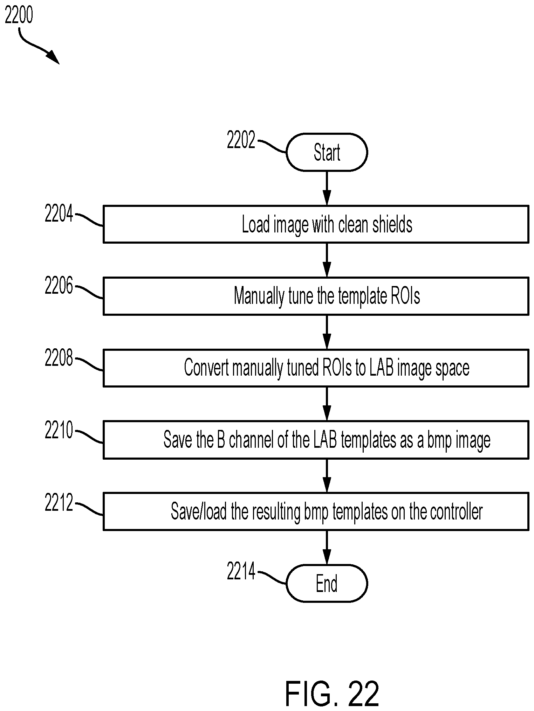

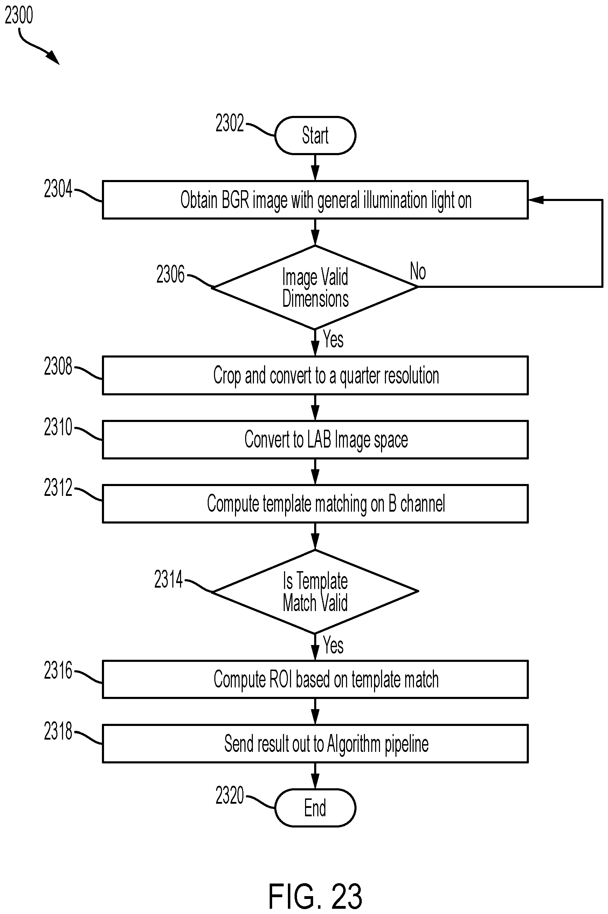

One or more of the top side template ROI 2016, top corner template ROI 2018, bottom corner template ROI 2020, and bottom side template ROI 2024 may at least partially intersect the ROI 2002. In the illustrative example of Fig. 20, at least part of the top side template ROI 2016 and at least part of the bottom side template ROI 2024 may intersect with the ROI 2002. As also illustrated in the example of Fig. 20, the top corner template ROI 2018 and the bottom corner template ROI 2020 may not intersect with the ROI. In some examples, one or more of the top corner template ROI 2018 and bottom corner template ROI 2020 may intersect with the ROI 2002. In another example, each of the top side template ROI 2016, top corner template ROI 2018, bottom corner template ROI 2020, and bottom side template ROI 2024 may intersect with the ROI 2002. Referring now to Figs. 21a-21d, one or more templates are illustrated. As described below, the templates may be created via a template compute method 2200, as shown in Fig. 22, and the templates may be used in an ROI determination method 2300, as illustrated in Fig. 23. Fig. 21a illustrates a top side template 2100 with a first shield portion 2102 and a first notch portion 2104. The top side template 2100 may correlate with the top side template ROI 2016 (see Fig. 20), and the first shield portion 2102 may represent the portion of the first shield 2008 located in the top side template ROI 2016. The first notch portion 2104 may represent the portion of the first notch 2012 located within the top side template ROI 2016. Fig. 21b illustrates a top corner template 2106 with the first shield portion 2102 and the first notch portion 2104. The top corner template 2106 may correlate with the top corner template ROI 2018 and the first shield portion 2102 may represent the portion of the first shield 2008 located in the top corner template ROI 2018. The first notch portion 2104 may represent the portion of the first notch 2012 located within the top corner template ROI 2018.

Referring to Fig. 21c, a bottom corner template 2108 is illustrated with a second shield portion 2110 and a second notch portion 2112. The bottom corner template 2108 may represent the bottom corner template ROI 2020 in Fig. 20, and the second shield portion 2110 may represent the portion of the second shield 2010 located within the bottom corner template ROI 2020. The second notch portion 2112 may represent the portion of the second notch 2014 located within the bottom corner template ROI 2020. Fig. 21d illustrates a bottom side template 2114 with a second shield portion 2110 and a second notch portion 2112. The bottom side template 2114 may represent the bottom side template ROI 2024 of Fig. 20, and the second shield portion 2110 may represent the portion of the second shield 2010 located within the bottom side template ROI 2024. The second notch portion 2112 in Fig. 21d may represent the portion of the second notch 2014 located within the bottom side template ROI 2024.

Referring now to Fig. 22, one example of a template compute method 2200 is illustrated. The template compute method 2200 may be executed to create templates such as, for example, the top side template 2100, the top corner template 2106, the bottom corner template 2108, and the bottom side template 2114 as illustrated in Figs. 21a-21d. The template compute method 2200 may be computed via one or more algorithms or programs on one or more computers. In some examples, the computations of the template compute method 2200 and the ROI determination method 2300 may be performed on a processor coupled to the imaging unit 62, or may be communicated with and performed by a remote computer or processor. In some examples, one or more programs used in methods 2200 and/or 2300 may include software packages, such as OpenCV, for example.

Starting at block 2202, an image may be loaded with clean shields, as in block 2204. In some examples, the image may be captured by the camera or imaging system 62. In one example, the image in block 2202 may be the image of Fig. 19, wherein the image 1900 does not have the ROI 1902. In another example, the image in block 2202 may be the image of Fig. 20, wherein the image 2000 may not have the ROI 2002, top side template ROI 2016, top corner template ROI 2018, bottom corner template ROI 2020, or bottom side template ROI 2024. In some examples, the image may be loaded into a computer program. The image in block 2204 may be captured and loaded into the computer program as a red-blue-green image, also referred to as an RGB image. In one example, the shields in block 2204 may be the first and second shields 1908, 1910 of Fig. 19. In another example, the shields in block 2204 may be the first shield 2008 and the second shield 2010 of Fig. 20. In some examples, the computer program may have a threshold to determine whether the shields are clean. In other examples a user may determine whether the shields are clean by inspecting the image before or after loading the image.

In block 2206, the template ROIs may be manually tuned. In some examples, new template ROIs may be generated each time one ROI is created. In other examples, the template ROIs may be generated and those template ROIs may be used to create more than one ROI. In some examples, the template ROIs may refer to one or more of the top side template ROI 2016, top corner template ROI 2018, bottom corner template ROI a 2020, and the bottom side template ROI 2024. Some examples of templates may be illustrated in Figs. 21a-21d. In some examples, each template may include a first or second shield portion 2102, 2110, and a first or second notch portion 2104, 2112. The templates in Figs. 21a-21d may be created from the template ROIs of Fig. 20. More specifically, the top side template 2100 may be defined by the top side template ROI 2016, the top corner template 2106 may be defined by to the top corner template ROI 2018, the bottom corner template 2108 may be defined by the bottom corner template ROI 2020, and the bottom side template 2114 may be defined by the bottom side template ROI 2024. To create the top side template ROI 2016, top corner template ROI 2018, bottom corner template ROI 2020, and bottom side template ROI 2024, a user may manually size, or tune, one or more polygon shapes. In the illustrative example of Fig. 20, the template ROIs 2016, 2018, 2020, 2024 may be rectangular-shaped. The shapes may be manually sized, or tuned, via the computer program.

Referring now to block 2208, the manually tuned ROIs may be converted to LAB image space. In some examples, the image and template ROIs may be in the RGB image space. In these examples, one or more of the image and the template ROIs may be converted to the LAB image space. This conversion may be executed using conventional software. In block 2210, the LAB templates may be saved to the B channel as a bmp image. In some examples, the LAB templates may be saved to other channels. The image may also be saved as a different file format, such as, for example, as a JPEG, JPG, PNG, GIF, WebP, TIFF, HEIF, SVG, EPS, PDF, PSD, AI, XCF, INDD, and/or raw image file. In some examples, any type of raster image file format or vector image file format, or combination of these formats may be used.

In block 2212, the resulting bmp templates may be saved/loaded on the controller. As mentioned above, the bmp templates may not be limited to bmp file formats, and may be any type of raster image file format or vector image file format, or a combination thereof. In some examples, the controller may be external to the computer. In other examples, the templates may be saved and/or loaded to the computer. Once the bmp templates are saved/loaded on the controller, the template compute method 2200 may end, as in block 2214.

Referring now to Fig. 23, one example of an ROI determination method 2300 is illustrated. The ROI determination method 2300 may be used to generate or determine one or more ROIs. In one example, the ROI determination method 2300 may generate the ROI 1902 of Fig. 19. In another example, the ROI determination method 2300 may generate or determine the ROI 2002 of Fig. 20. The ROI determination method 2300 may start with block 2302. In block 2304, a BGR image may be obtained with the general illumination light on. In block 2304, the BGR image may be obtained from the imaging unit 62 (see Fig. 1). The general illumination light 68 may emit light such as, for example, LED light. In other examples, the general illumination light 68 may be halogen light, incandescent light, fluorescent light, or any other type of broad-beamed light capable of illumination. Once the image is captured, the captured image may be communicated to a computer or image processing unit.

In block 2306, a determination is made as to whether the image dimensions are valid. In some examples, there may be one or more threshold values for the image dimensions, and when the image dimensions are within the one or more threshold values the image dimensions may be valid. In these examples, when the image dimensions are not within the one or more threshold values then the image dimensions may not be valid. In other examples, rather than using a threshold value, particular image dimensions may be used and the computer may determine whether the dimensions of the image captured by the imaging unit 62 are valid relative to the particular image dimensions.

In these examples, there may be a margin of error, and when the image dimensions are equal to or within the margin of error the dimensions may be valid, and when the image dimensions are not within the margin of error the dimensions may not be valid. Determining whether the image dimensions are valid, as in block 2306, may ensure the image size is compatible with the template size.

In some examples, the image dimensions may be the dimensions of the image captured by the imaging unit 62. In some examples, the image dimensions may include the height H and width W of the image, as illustrated in Fig. 19. The image dimensions may include other dimensions, such as the specific dimensions of the components in the image, such as, for example, the dimensions of one or more of the first shield, the second shield, the first notch, the second notch, and the trench or furrow. In some examples, the image dimensions may include the amount of pixels in the image, or the digital image file size. In some examples, computer software may determine whether the image dimensions are valid. When the image dimensions are not valid, an ROI may not be determined and the ROI determination method 2300 may end, as in block 2320. When the image dimensions are valid, the image may be cropped and converted to quarter resolution, as in block 2308.

Referring now to block 2308, the image may be cropped and converted to quarter resolution. In some examples, a user may manually crop the image. In other examples, the image may be cropped automatically. Automatic image cropping and image resolution reduction may be executed via one or more of the computer, computer software, an algorithm, or a processing unit. While quarter resolution is described in block 2308, other image resolutions that are greater than or less than quarter resolution may be used. Cropping the image and reducing the image resolution may be used as a cost-reduction strategy because the ROI determination method 2300 may be more expensive and/or may have slower processing times in an image that is larger and has a higher resolution compared to a smaller image with a lower resolution. In some examples, the image may not be cropped and converted to a lower resolution.

In block 2310, the image may be converted to LAB image space. In some examples, the image may be processed in the BGR image space rather than the LAB image space. In some examples, a determination may be made whether to convert the image to LAB image space or to remain in BGR image space. The image may be converted to LAB image space to facilitate template matching when the templates are also in the LAB image space.

Referring now to block 2312, template matching may be computed on the B channel. Template matching may include comparing the templates created in the template compute method 2200 relative to one or more areas of the image of block 2310. The image of block 2310 may be referred to herein as the comparator image. The templates created in the template compute method 2200 may include the top side template 2100, the top corner template 2106, the bottom corner template, and the bottom side template, as illustrated in figs. 21a-21d. In some examples, more templates or less templates may be used in the comparison. The templates may be compared to one or more areas of the comparator image. As provided in block 2312, template matching may be computed on the B channel. In other examples, other channels may be used to compute the template matching.

Referring now to block 2314, a determination may be made as to whether the template match is valid. In some examples, contextual clues in the comparator image may be used to determine whether the template match is valid. In some examples, contextual clues may determine where each template 2100, 2106, 2108 and 2114 may be found in the comparator image. Contextual clues may include one or more of the first notch, second notch, first shield, second shield, and the edges of the comparator image, among other things. The contextual clues may limit or prohibit false positive matches between the templates and the comparator image. In one example, a match may be found between the bottom side template 2114 and the comparator image, but the match may be located on the top side of the comparator image rather than the bottom side of the comparator image. In some examples, the contextual clues may invalidate a template match. In other examples, the contextual clues may be used in addition to confidence measurements to determine whether the template match is valid 2314. In some examples, one or more confidence measurements may be provided when a template match is computed in block 2312. The confidence measurement may include difference functions, difference errors, variances, thresholds, and/or information on how much each pixel differs between the area of the comparator image and the template.

In some examples, there may be a tolerance to determine if the template match is valid. The tolerance may be based on the contextual clues and the confidence measurements among other variables, and the tolerance may define the amount of variation between the template and comparator image that is tolerated by the ROI determination method 2300. In some examples, the tolerance may have configurable parameters. In some examples, when an invalid template match is determined, the ROI determination method 2300 may continue by computing template matching on B channel, as in block 2312. In other examples, when the template match is invalid, the ROI determination method 2300 may produce an error. In some examples, when the invalid template match is determined, the ROI determination method 2300 may end.

When the template match is valid in block 2314, the ROI may be computed based on the template match, as in block 2316. In some examples, the ROI may be computed by offsetting the ROI from the one or more template matches by a predetermined amount. In some examples, the predetermined amount the ROI is offset from the one or more template matches may be a configurable parameter. Once the ROI is computed based on the template match, as in block 2316, the results may be sent to an algorithm pipeline, as in block 2318. In some examples, the algorithm pipeline may refer to an algorithm that detects the laser position to calculate geometry of the trench or furrow. Computations relating to the laser may be narrowed to the area within the ROI. Narrowing computations related to the laser within the ROI may reduce computation time for processing, and may increase the frequency of images that may be processed to estimate the depth of the trench or furrow. After the results are sent to the algorithm pipeline, as in block 2318, the ROI determination method 2300 may end, as in 2320.

Each method described herein may include any number of blocks and the blocks may be executed in any order. In some implementations, there may be more or less blocks than those illustrated in each method described herein.

In some examples, the visualization system 60 may include a control system with a controller 80. The controller 80 may include a memory unit and may be microprocessor-based. The memory unit may generally include instructions stored therein that are executable by a processor of the controller to control operation of the visualization system 60 or the row unit 14. It will be understood, however, that this disclosure contemplates other implementations in which the controller 80 is not microprocessor-based, but is configured to control the operation of the visualization system 60 or row unit 14 based on one or more sets of hardwired instructions and/or software instructions stored in the memory unit.

In a further example, the work machine 140 may comprise a calibration system. The calibration system comprising a calibration target 1008; an imaging unit 1002 at least partially directed towards the calibration target 1008 and configured to capture a calibration target image; a structured light unit 1004 configured to project structured light at least partially towards the calibration target 1008; and a control and image processing unit 1012 communicatively coupled to the imaging unit 1002 and structured light unit 1004; wherein the control and image processing unit 1012 calibrates the structured light unit 1004 with the imaging unit 1002 via the calibration target image from the imaging unit 1002, the calibration target 1008 image including the structured light of the structured light unit 1004 on the calibration target 1008.

The imaging unit 1002 has a field of view with a center area, and the center area is directed towards the calibration target 1008 forming an imaging unit angle between the center area and the calibration target 1008; wherein the structured light unit 1004 projects structured light towards the calibration target 1008 forming a structured light angle between the structured light of the structured light unit 1004 and the calibration target 1008, the structured light angle having a different measurement relative to the camera imaging unit angle.

The control and image processing unit 1012 calculates the error of each distance by comparing the calculated distances of the camera coordinate points with known dimensions.

The calibration system may further comprise an actuator 1040 coupled to the calibration target 1008, wherein the actuator 1040 moves the calibration target 1008 from a first location to one or more other locations.

The imaging unit 1002 angle at the first location equals the imaging unit angle the one or more other locations.

The calibration target 1008 includes a row and a plurality of columns, wherein the plurality of columns alternate between a first and second color.

The calibration target 1008 may further includes a plurality of rows and a plurality of columns, wherein the plurality of rows alternate between a first and second color and the plurality of columns alternate between the first and second color.

The calibration target 1008 moves linearly relative to the imaging unit 1002.

The calibration system comprises at least three locations of interest with predetermined positions. The actuator 1040 moves the calibration target 1008 to at least two predetermined positions.

The calibration system may further comprise a validation target 1500, the validation target 1500 having a plurality of steps with known dimensions.

A related calibration method comprises the above described calibration system and further: moving the calibration target 1008 to a plurality of locations; projecting structured light onto a calibration target 1008 via a structured light unit 1004 at each of the plurality of locations; capturing an image with the imaging unit 1002 at each of the plurality of locations, wherein each image includes the structured light of the structured light unit 1004 on the calibration target 1008; detecting the calibration target 1008 and one or more structured light points in each image and undistorting the calibration target 1008 and structured light points; and converting the structured light points to a camera coordinate system using a rotation matrix and translation vector between the camera coordinate system and a calibration target coordinate system, the camera coordinate system being the coordinate system of the imaging unit 1002 or structured light unit 1004 and the calibration target coordinate system being the coordinate system for the calibration target 1008. The calibration method further comprises: fitting a plane to the structured light points in the camera coordinate system; calculating a normal and centroid 1704 of the fitted plane; and saving the fitted plane, normal, and centroid of the fitted plane.

**Claims**

1. A work machine (140) comprising:

   a chassis supported by at least one ground engaging mechanism; and
   a row unit (14) coupled to the chassis, the row unit (14) comprising:

      a furrow opener (22) configured to open a trench or furrow (192) as the machine (140) moves across ground;
      an imaging unit (62) configured to capture an image including at least part of the trench or furrow (192);
      a structured light unit (64) configured to project structured light on the trench or furrow (192);
      a general illumination light (68) configured to illuminate the trench or furrow (192);
      a control and image processing unit (1012) communicatively coupled to the imaging unit (62); and
      a shield (1908, 1910) configured to limit disturbances in images captured by the imaging unit (62);

         wherein the imaging unit (62) captures an image (1900), the image (1900) comprising the trench or furrow (192) with the structured light of the structured light unit (64) on the trench or furrow (192), and at least one shield (1908, 1910) and communicates the image (1900) to the control and image processing unit (1012);
         wherein the control and image processing unit (1012) processes the image by converting a plurality of points of the structured light of the structured light unit (64) to plane points and calculates a depth of the trench or furrow (192) via the plane points;

wherein the image at least partially includes the trench or furrow (192), a laser (1906), and at least one of a first or second shield (1908, 1910) wherein the first and second shield (1908, 1910) are configured to limit disturbances in images captures by the imaging unit (62).

2. The work machine of claim 1, wherein the image (1900) comprises a region of interest (1902), the region of interest (1902) comprising the shield (1908, 1910) and the structured light of the structured light unit (64) projected on the trench or furrow (192);

wherein the control and processing unit (1012) is configured to receive the image (1900) from the imaging unit (62), compare the image (1900) to one or more predefined templates stored in the imaging unit (62), and define the region of interest (1902) via the comparison between the image and the one or more predefined templates.

FIG. 1

FIG. 2

EP 4 631 332 A1

FIG. 3

FIG. 4

EP 4 631 332 A1

FIG. 5

FIG. 6

29

FIG. 7

FIG. 8

FIG. 9

FIG. 10

FIG. 11

FIG. 12

1300

1302 — Start

1304 — Move calibration target to set distance from camera or imaging unit

1306 — Capture Laser Image

1308 — Detect calibration target

1310 — Detect Laser

1312 — Convert detected calibration target and laser points to undistorted points

1314 — Get rotation matrix R and translation vector t between camera coordinate system and calibration target coordinate system

1316 — Calculate laser points in camera coordinate system using R and t

No

1318 — All calibration target locations?

Yes

1320 — Fit a plane with all laser points converted to the camera coordinate system from all calibration locations

1322 — Save fitted plane, normal, and centroid into camera or imaging unit

1324 — End

FIG. 13

1400

Start — 1402

1404 — Capture laser image

1406 — Segment laser points and convert to undistorted points

1408 — Convert undistorted laser points (u, v) to camera coordinate positions $(x_c, y_c, z_c)$ using fitted laser plane normal and centroid

1410 — Create rotation matrix and translation vector between the camera coordinate system and the laser plane coordinate system

1412 — Transform laser points from camera coordinate position to laser plane projected points

1414 — Calculate depth of trench from laser plane projected position

End — 1416

FIG. 14

FIG. 15A

FIG. 15B

FIG. 16

1700

1702　　　　　1702　1702

(top 691 144)

(691 144)
LB

1704

(638 193)

WB

(558 240)

1702

(499 276)

1704

1702

(475 303)

1704

1702

(527 340)

1702

1704

(595 382)

(bottom 687 438)

(687 438)

1702

1702

FIG. 17

FIG. 18

FIG. 19

FIG. 20

FIG. 21A

FIG. 21B

FIG. 21C

FIG. 21D

2200

2202 — Start

2204 — Load image with clean shields

2206 — Manually tune the template ROIs

2208 — Convert manually tuned ROIs to LAB image space

2210 — Save the B channel of the LAB templates as a bmp image

2212 — Save/load the resulting bmp templates on the controller

2214 — End

FIG. 22

2300

2302 — ( Start )

2304 — Obtain BGR image with general illumination light on

2306 — Image Valid Dimensions — No

Yes

2308 — Crop and convert to a quarter resolution

2310 — Convert to LAB Image space

2312 — Compute template matching on B channel

2314 — Is Template Match Valid

Yes

2316 — Compute ROI based on template match

2318 — Send result out to Algorithm pipeline

2320 — ( End )

FIG. 23

| | Europäisches Patentamt European Patent Office Office européen des brevets | **EUROPEAN SEARCH REPORT** | **Application Number** EP 25 16 1721 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/158569 A1 (DEERE & CO [US]) 24 August 2023 (2023-08-24) * the whole document * | 1,2 | INV. A01C5/06 G01B11/22 ADD. A01C7/20 A01C7/10 A01B63/111 |

TECHNICAL FIELDS SEARCHED (IPC)

A01C
A01B
G01B

The present search report has been drawn up for all claims

| Place of search | Date of completion of the search | Examiner |
|---|---|---|
| The Hague | 6 August 2025 | Weinmüller, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1721

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2025

| Patent document cited in search report | Publication date | Patent family member(s) | | Publication date |
|---|---|---|---|---|
| WO 2023158569 A1 | 24-08-2023 | AU | 2023222734 A1 | 13-06-2024 |
| | | CA | 3242664 A1 | 24-08-2023 |
| | | WO | 2023158569 A1 | 24-08-2023 |

EPO FORM P0459

For more details about this annex : see Official Journal of the European Patent Office, No. 12/82